# EUROPÄISCHE PATENTSCHRIFT

(11) **EP 0 725 918 B1**
(45) Veröffentlichungstag und Bekanntmachung des Hinweises auf die Patenterteilung: **30.07.1997**
(21) Anmeldenummer: 94930143.6
(22) Anmeldetag: 12.10.1994
(51) Int. Cl.: F24J 2/00, F24J 2/40, E04B 1/76

(54) **AUSSENWANDAUFBAU FÜR GEBÄUDE, INSBESONDERE PANEEL IM BRÜSTUNGSBEREICH EINER GEBÄUDEWAND**
OUTER WALL STRUCTURE FOR BUILDINGS, IN PARTICULAR WAINSCOT PANEL FOR THE BREASTWORK AREA OF A BUILDING WALL
STRUCTURE DE PAROI EXTERIEURE POUR BATIMENTS, NOTAMMENT PANNEAUX DE LAMBRIS POUR LA ZONE D'APPUI DE LA PAROI D'UN BATIMENT

(30) Priorität: 13.10.1993 DE 4334851
(43) Veröffentlichungstag der Anmeldung: 14.08.1996
(73) Patentinhaber: Norsk Hydro a.s., 0257 Oslo 2 (NO)
(72) Erfinder: Schulz, Harald, D-89358 Ettenbeuren (DE)
(74) Vertreter: Fay, Hermann, Dipl.-Phys. Dr.
(86) Internationale Anmeldenummer: DE9401201
(87) Internationale Veröffentlichungsnummer: WO9510741

(56) Entgegenhaltungen:
- EP-A- 0 016 337
- EP-A- 0 473 859
- WO-A-82/03100
- AT-B- 359 238
- CH-A- 678 203
- DE-A- 2 610 370
- DE-A- 3 931 594
- GB-A- 2 054 004
- SOLAR ENERGY, Bd.49, Nr.5, 1992, ELMSFORD,US Seiten 413 - 427 BRAUN ET AL 'TRANSPARENT INSULATION OF BUILDING FACADES-STEPS FROM RESEARCH TO COMMERCIAL APPLICATIONS'
- INTERNATIONAL JOURNAL OF SOLAR ENERGY, Bd.11, Nr.1/2, 1992, NEW YORK Seiten 117 - 134 WITTWER 'transparent insulation materials and their application in active and passive systems'
- SOLAR ENERGY, Bd.50, Nr.5, Mai 1993, ELMSFORD,US Seiten 407 - 414 BECK ET AL 'thermochromic gels for control of insolation'
- BAUPHYSIK, Bd.9, Nr.5, 1987, BERLIN DE Seiten 213 - 217 GERTIS 'AUSSENWÄNDE MIT TRANSPARENTEN WÄRMEDÄMMSTOFFEN'

## Beschreibung

Die Erfindung betrifft einen Außenwandaufbau nach dem Oberbegriff des Anspruches 1.

Derartige Fassadenbekleidungen, die der passiven Nutzung der Solarenergie an den opaken Teilen der Gebäudehülle dienen, sind aus WO-82/03 100 als nächstkommendem Stand der Technik bekannt. Dort wird anhand der Fig. 1 ein Außenwandaufbau beschrieben, bei dem zwischen einer transparenten außenseitigen Wandschale und der massiven Wand eine an die außenseitige Wandschale angrenzende transparente äußere Wärmedämmschicht und an der nach außen gewandten Seite dieser Wand eine Isolierschicht vorgesehen sind, die von der transparenten äußeren Wärmedämmschicht durch eine die Sonnenstrahlung absorbierende Schicht getrennt ist. Die in letzterer entstehende Wärme wird durch die Isolierschicht in die Wand abgeleitet. Um Überhitzungen der absorbierenden Schicht und der Isolierschicht zu vermeiden, besteht die Isolierschicht aus einem Material, dessen Wärmeleitfähigkeit als Funktion der Temperatur sehr stark veränderlich ist. Dazu enthält das Material einen normalerweise flüssigen Wärmeträger, der auf der warmen Seite der Isolierschicht verdampft. Der Dampf diffundiert durch die Poren des Materials zur kalten Schichtseite, wo er unter Wärmeabgabe an die Wand kondensiert. Das Kondensat gelangt wieder, beispielsweise durch Kapillarwirkung, zurück zur warmen Schichtseite, wodurch sich ein Kreislauf des einmal flüssigen, einmal dampfförmigen Wärmeträgers ergibt und die Wärme hauptsächlich von außen nach innen transportiert wird. Da sich die Wärmeleitfähigkeit mit wachsender Temperatur sehr schnell und stark vergrößert, wird mit steigender Sonneneinstrahlung unverhältnismäßig mehr Wärme aus der absorbierenden Schicht durch die Isolierschicht in die massive Wand abgeführt, so daß zwar die Temperatur der absorbierenden Schicht entsprechend geringer ansteigt, aber die Wand auf der Gebäudeinnenseite wärmer als erwünscht werden kann.

Weiter ist eine Fassadenbekleidung mit den eingangs genannten Merkmalen in EP-A-O 362 242 unter der Bezeichnung Fassadenbekleidung IV beschrieben, von der gesagt wird, daß sie den Nachteil besitze, daß der Wärmegewinn zu groß sei, weshalb ein zusätzlicher Sonnenschutz auf jeden Fall notwendig sei. Um daher zu verhindern, daß durch die einfallende Sonnenstrahlung im Inneren des Außenwandaufbau materialzerstörende Überhitzungen entstehen, ist in EP-A- 0 362 242 vorgeschlagen, unter Verzicht auf die strahlungsundurchlässige Trennschicht die dann zwischen der außenseitigen und der innenseitigen Wandschale nur noch vorhandene einzige Wärmedämmschicht etwas transluzent mit einem Transmissionsgrad von weniger als 10% und einem Absorptionsgrad von mehr als 15% auszubilden, so daß die Absorption der einfallenden Sonnenstrahlung innerhalb der Wärmedämmschicht über einen vergleichsweise dicken Schichtbereich erfolgt. Die Wärmedämmschicht muß dabei insgesamt so dick sein, daß sich bei nutzbarer Sonneneinstrahlung in der Wärmedämmschicht ein Temperaturprofil einstellt, dessen maximaler Wert innerhalb der Dämmschicht zwischen ihrer äußeren und ihrer inneren Schichtbegrenzungsfläche liegt.

Einen ähnlichen Aufbau wie WO-82/03 100 offenbart die GB-A-2 054 004. Jedoch ist bei der daraus bekannten Konstruktion anstelle der inneren Wärmedämmschicht eine Speicherschicht hohen Wärmespeichervermögens vorhanden. Eine der inneren Wärmedämmschicht des eingangs genannten Aufbaus entsprechende Schicht an der innenseitigen Wandschale aber fehlt. Die Wärmespeicherschicht kann die fehlende innere Wärmedämmschicht funktionell nicht ersetzen. Daher ist bei dieser bekannten Konstruktion eine besondere, veränderliche Abschattierung der außenseitigen Wandschale erforderlich, um Überhitzungen im Wandaufbau zu verhindern.

Aus DE-A-26 10 370, Fig. 12 und 13, sind Fenster für Sonnenkollektoren bekannt, bei welchen auf einer äußere Verglasung nach innen eine äußere Wärmedämmschicht und daran ein Solarabsorber mit einer anschließenden Isolierschicht folgen. An der der Isolierschicht zugewandten Seite des Solarabsorbers sind Durchlaßöffnungen vorhanden, die zur Aufnahme eines Wärmeträgermediums, z. B. Wasser, dienen. Derartige Fenster sind als Außenwandaufbau nicht geeignet. An die Isolierschicht schließt keine innenseitige Wandschale an. Die im Solarabsorber entstehende Wärme wird unmittelbar durch das Wärmeträgermedium abgeführt.

Der Erfindung liegt die Aufgabe zugrunde, einen Außenwandaufbau der eingangs genannten Art so auszubilden, daß unter möglichst hoher Solarenergienutzung und Gewährleistung der Behaglichkeit im Rauminneren zu hohe, weil materialzerstörende Temperaturen innerhalb des Wandaufbaus sicher vermieden werden, wobei die Bautiefe des Wandelements möglichst gering, insbesondere nicht größer sein soll, als die statischen Notwendigkeiten der tragenden Konstruktion, insbesondere beispielsweise die Pfosten und Riegel, erfordern.

Diese Aufgabe wird bei einem Außenwandaufbau mit den im Oberbegriff des Anspruches 1 genannten Merkmalen erfindungsgemäß durch die im kennzeichnenden Teil des Anspruches 1 genannten Maßnahmen gelöst. Dort wie im folgenden bedeuten die Wärmedurchgangswiderstände Rₐ, Rᵢ jeweils die Summe aus dem Wärmedurchlaßwiderstand 1/Lambdaₐ bzw. 1/Lambdaᵢ des Wandaufbaus zwischen der Trennschicht und der Wandaußenseite bzw. Wandinnenseite und dem Wärmeübergangswiderstand 1/alphaₐ an der Wandaußenseite bzw. 1/alphaᵢ an der Wandinnenseite. Entsprechend bedeutet der Wärmedurchgangswiderstand R_{g}=Rₐ+Rᵢ=1/alphaₐ+1/Lambdaₐ+1/Lambdaᵢ +1/alphaᵢ die Summe des Wärmedurchlaßwiderstandes 1/Lambdaₐ+1/Lambdaᵢ des gesamten Wandaufbaus und der inneren bzw. äußeren Wärmeübergangswiderstände 1/alphaₐ, 1/alphaᵢ.

Bei dem erfindungsgemäßen Wandaufbau erfolgt die Absorption der einfallenden Sonnenstrahlung im wesentlichen in der die transparente äußere Wärmedämmschicht zur Seite der inneren Wärmedämmschicht hin begrenzenden Trennschicht, an der somit bei Sonneneinstrahlung in der Regel die höchsten Temperaturen innerhalb des Wandaufbaus auftreten. Die Trennschicht kann dabei sehr dünn, etwa eine Folie, ein Film oder eine Beschichtung sein, wenn sie nur für die Solarstrahlung weitgehend undurchlässig ist. Die erfindungsgemäße Abstimmung der im Anspruchskennzeichen genannten Größen kann durch einen gewollt verringerten Wert des Gesamtenergiedurchlaßgrades g der außenseitigen Wandschale und/oder des Absorptionsgrades alpha an der Trennschicht eine geringere Aufnahme an Solarenergie im Wandaufbau zur Folge haben, gewährleistet aber bei gleichwohl guter Nutzung der Solarenergie, daß auch bei höchstmöglicher Sonneneinstrahlung der maximale Temperaturwert Tₜₘₐₓ im Wandaufbau nicht überschritten wird, so daß Materialzerstörungen nicht auftreten können. Gleichzeitig kann durch diese erfindungsgemäße Abstimmung überraschenderweise aber außerdem erreicht werden, daß die Temperatur an der Wandinnenoberfläche nicht größer als der Wert Tₒᵢₘₐₓ werden kann, so daß diese Temperatur und der an der Wandinnenseite zur Rauminnenluft hin auftretende, durch den Wärmeübergangswiderstand 1/alphaᵢ bedingte Temperatursprung auch bei maximaler Sonneneinstrahlung in Bereichen liegen, die von im Rauminneren sich aufhaltenden Personen noch als behaglich empfunden werden. Die im Rahmen dieser Abstimmung erforderlichen Werte des Wärmedurchgangswiderstandes Rᵢ der innenseitigen Wandschale mit ihrer inneren Wärmedämmschicht sind unschwer durch Schichtdicken erreichbar, welche die Bautiefe und den konstruktiven und kostenmäßigen Aufwand des erfindungsgemäßen Wandaufbaus insgesamt nicht über das vergrößern müssen, was für den Wert R_{gmin} des Wärmedurchgangswiderstandes des gesamten Wandaufbaus ohnehin erforderlich ist, damit auch des Nachts und bei minimaler Außentemperatur eine ausreichende Wärmedämmung besteht, also die Temperatur an der Wandinnenfläche den bezüglich Behaglichkeit und Tauwasserrisiko minimalen Wert nicht unterschreitet. - Die im Rahmen der erfindungsgemäßen Größenabstimmung bestehende Möglichkeit, den g-Wert der außenseitigen Wandschale und äußeren Wärmedämmschicht bewußt zu verringern, kann in Verbindung mit der absorbierenden Trennschicht im übrigen dazu genutzt werden, das äußere Erscheinungsbild des Wandaufbaus zu optimieren, worin ein weiterer wichtiger Vorteil der Erfindung zu sehen ist. Die reduzierten g-Werte verringern nämlich die Durchsicht durch die außenseitige Wandschale, erschweren also die Einsicht von außen in den hinter der außenseitigen Wandschale befindlichen Wandaufbau, wodurch Anforderungen an die Ästhetik des Erscheinungsbildes des Wandaufbaus leichter erfüllt werden können.

Um die genannten Forderungen (Einhalten bestimmter Grenzen für die maximal auftretende Temperatur im Wandaufbau und die maximal auftretende Innenoberflächentemperatur) einhalten zu können, muß mit steigendem Wärmedurchgangswiderstand Rₐ der äußeren Wandschale und der äußeren Wärmedämmschicht der Anteil der an der Trennschicht aufgenommenen Solarenergie durch Reduzierung des g-Wertes und/oder der Absorption an der Trennschicht verringert werden. Die Reduzierung von g und/oder alpha ermöglicht gleichzeitig bei gegebenem Rₐ eine zunehmende Erweiterung des zulässigen Bereichs für den Wärmedurchgangswiderstand Rᵢ der inneren Wandschale nach unten und nach oben.

Im einzelnen ist die erfindungsgemäße Größenabstimmung durch die im Anspruch 1 enthaltene Tabelle 1 gekennzeichnet. Ausführungen des Wandaufbaus, die sich dabei durch eine besonders gute Solarenergienutzung auszeichnen, sind durch den Anspruch 2 und die in ihm enthaltnee Tabelle 2 gekennzeichnet. Diese Tabellen gelten unter den Voraussetzungen Tₘₐₓ = 120°C, Tₒᵢₘₐₓ = 36°C, Tₐₘₐₓ =30°C, Tᵢ = 20°C, wobei Tₐₘₐₓ die höchste zu erwartende sommerliche Außentemperatur und Tᵢ die Innentemperatur bedeuten, und für eine Süd/West-Orientierung des Wandaufbaus mit einer zu erwartenden maximalen Solareinstrahlung von qₛₘₐₓ = 700 W/m². In der Tabelle 1 sind für alpha gleich 0,2; 0,4; 0,6 und 0,8 jeweils in Abhängigkeit von Rₐ (erste Spalte) und alpha*g (zweite Spalte) der zulässige Maximalwert (dritte Spalte) und Minimalwert (vierte Spalte) für Rᵢ zusammengestellt. Zwischenwerte können durch Interpolationen ohne weiteres ermittelt werden. In der Tabelle 2 ist für ausgesuchte und bsonders bevorzugte Fälle außer den jeweiligen Rₐ-, alpha-, g- und Rᵢ-Werten in der letzten Spalte die Eignung für die Nutzung der Solarenergie in drei Stufen +, ++ und +++ gekennzeichnet, wobei der Nutzungsgrad mit der Anzahl der Plus-Zeichen zunimmt.

Die Werte von Rₐ, Rᵢ, alpha und g gemäß der Tabellen 1 und 2 hängen natürlich vom Wert qₛₘₐₓ der zu erwartenden höchstmöglichen Sonneneinstrahlung ab. Dieser Wert ist je nach der Orientierung des Wandaufbaus nach den Himmelsrichtungen verschieden; bei Orientierung nach Süden ist er am größten, bei Orientierung nach Norden am kleinsten. Die Erfindung empfiehlt, diese Richtungsabhängigkeit gemäß Anspruch 3 auszunützen, also bei der Größenabstimmung für einen bespielsweise nach Norden gerichteten Wandaufbau den dafür wesentlich kleineren Wert qₛₘₐₓ als für Südrichtung zu berücksichtigen, um auf diese Weise erheblich kleinere k- und k_{eq}- Werte für den Wandaufbau zu ermöglichen, als sich bei Verwendung des qₛₘₐₓ-Wertes für Südrichtung ergeben würden.

Die im Rahmen der Erfindung durch eine absichtliche Verringerung des Wertes für alpha*g (hier wie im folgenden bedeutet * das Multipikationszeichen) der außenseitigen Wandschale weniger aufgenommene Solarstrahlung wird durch die Anpassung des Wärmedurchgangskoeffizienten k = 1/Rₐ dieser Wandschalung optimal genutzt, indem der entsprechend verringerte k-Wert den Wärmeverlust von der absorbierenden Trennschicht nach außen durch die äußere transparente Wärmedämmschicht und die außenseitige Wandschale hindurch begrenzt. Um derartige gegenseitige Anpassungen auf einfache Weise zu ermöglichen, empfiehlt es sich, die äußere Wandschale so auszubilden, daß ihr g-Wert und ihr k-Wert unschwer nach Wunsch beeinflußt werden können. Dies wird vorzugsweise durch die Ausbildung der Wandschale gemäß Anspruch 4 erreicht. Dabei kann die Luftschicht unmittelbar an die absorbierende Trennschicht angrenzen; es kann aber auch zwischen der Luftschicht und der Trennschicht eine Glasscheibe eingeschaltet sein, die dann der transparenten äußeren Wärmedämmschicht zuzurechnen ist. Die Verglasung kann von einer einzelnen Glasscheibe, gegebenenfalls mit innenseitiger Wärmeschutz-, insbesondere L-E-Schicht (das ist eine infrarotreflektierende Schicht) und/oder einer außen- oder innenseitigen Sonnenschutzschicht gebildet sein. Eine andere sehr vorteilhafte Ausführungsform ist dadurch gekennzeichnet, daß die Verglasung von Isolierglaselementen aus jeweils zwei oder drei Glasscheiben gebildet ist. Im letzteren Fall können die Elemente reduzierte Scheibenzwischenräume aufweisen, um die Ausdehnungswirkung (Pumpwirkung) der in den Scheibenzwischenräumen vorhandenen Luft bei deren Erwärmung gering zu halten. Weiter empfiehlt es sich, die Glasscheiben der Isolierglaselemente auf einzelnen, mehreren oder allen Scheibenseiten (im folgenden auch als Positionen bezeichnet) mit Wärmeschutzschichten, insbes. L-E-Schichten, zu versehen. Außerdem sind die Isolierglaselemente bzw. ihre Glasscheiben zweckmäßigerweise mit Sonnenschutzschichten ausgestattet. Solche Sonnenschutz- und Wärmeschutzschichten, wie auch in den Scheibenzwischenräumen der Isolierglaselemente ggf. vorhandene Edelgasfüllungen, dienen sämtlich dazu, den Wärmedurchgangswiderstand Rₐ und den g-Wert den jeweiligen Gegebenheiten und Erfordernissen anzupassen.

Eine weitere vorteilhafte Ausführungsform der Erfindung ist durch den Anspruch 12 gekennzeichnet. Die Wärmespeicherschicht, die sich vorzugsweise zwischen der Trennschicht und der inneren Wärmedämmschicht befindet, bringt bei dem erfindungsgemäßen Außenwandaufbau den Vorteil, daß die in der davor liegenden absorbierenden Trennschicht aufgenommene Solarenergie teilweise in der Speichermasse der Wärmespeicherschicht gespeichert und noch abgegeben wird, wenn sich das solare Energieangebot inzwischen verringert hat oder nicht mehr bestehen sollte. Je nach dem Wärmespeicher- und Wärmedämmvermögen der die Schichten in der innenseitigen Wandschale bildenden Speicher- und Dämmstoffe kann dabei in Abhängigkeit von den thermischen Eigenschaften der anderen Teile des Wandaufbaus, insbesondere der außenseitigen Wandschale und der transparenten äußeren Wärmedämmschicht, die Nutzung des solaren Energieangebots weiter verbessert werden, und zwar hinsichtlich der zu vermeidenden Überhitzungen im Wandelement als auch der zeitlichen Verschiebung in der Abgabe der gespeicherten Wärme gegenüber der tatsächlichen solaren Energieeinstrahlung. Denn die Wärmespeicherschicht ergibt unter sonst unveränderten Bedingungen eine niedrigere Temperatur an der absorbierenden Trennschicht, innerhalb des Außenwandelements überhaupt und an seiner Wandinnenfläche, was dazu genutzt werden kann, den g-Wert der außenseitigen Wandschale zu erhöhen, um ohne Überschreiten der maximal zulässigen Temperaturen das Solarenergieangebot vollständiger auszuschöpfen.

Im folgenden werden Ausführungsbeispiele der Erfindung anhand der Figuren 1 bis 3 näher erläutert; es zeigen:
- Fig. 1: einen Querschnitt durch den Schichtenaufbau eines erfindungsgemäßen Wandpaneels in nur schematischer Darstellung,
- Fig. 2: eine andere Ausführungsform des Wandpaneels in einer der Fig. 1 entsprechenden Darstellung,
- Fig. 3: den Schichtenaufbau lediglich der außenseitigen Wandschale in einer schematischen Darstellungsweise.

In der Zeichnung ist die außenseitige, Solarstrahlung aufnehmende Wandschale allgemein mit 10, die innenseitige Wandschale insgesamt mit 20 bezeichnet. Zwischen beiden befindet sich eine an die außenseitige Wandschale 10 unmittelbar angrenzende transparente äußere Wärmedämmschicht 30, während die innenseitige Wandschale 20 mindestens eine innere Wärmedämmschicht 22 aufweist, die homogen oder mehrschichtig ausgebildet sein und PUR-, PS-Schaum, Glasfasern, Mineralfasern oder dergleichen als Dämmstoffe und u. U. auch eine oder mehrere Luftschichten mit jeweils Luftschichtdicken zwischen 5 und 50 mm, vorzugsweise 20 mm, enthalten kann, was in der Zeichnung nicht im einzelnen dargestellt ist. Die Wandschale 20 besitzt weiter eine sie zum Innenraum hin begrenzende Abschlußschicht 23, die dampfdicht ausgebildet sein sollte und aus einem Abschlußblech aus Metall, wie Aluminium oder Stahl, aber auch aus einer Speichermasse, insbesondere Beton, bestehen kann. Die innenseitige Wandschale 20 kann auch eine Wärmespeicherschicht 21 enthalten, die auf der der transparenten Wärmedämmschicht 30 zugewandten Seite der innenseitigen Wandschale 20 angeordnet sein sollte und unterschiedlich ausgebildet sein kann, beispielsweise aus mineralischen Platten, Keramikplatten, aus Glas oder aus Natur- oder Kunststein, im letzter Fall insbesondere aus Beton bestehen, aber auch aus Kunststoff, insbesondere aus einer oder mehreren Kunststoffplatten aufgebaut sein, was aber ebenfalls im einzelnen in der Zeichnung nicht dargestellt ist. Im Prinzip kann die Speicherschicht 21, soweit vorhanden, der inneren Wärmedämmschicht 22 zugerechnet werden oder auch in sie integriert sein.

Die transparente Wärmedämmschicht 30 ist von einer Luftschicht in Schichtdicken von ca. 5 mm bis 50 mm, insbesondere von 20 mm, gebildet. Die transparente Wärmedämmschicht 30 und die innenseitige Wandschale 20 sind durch eine die Strahlung, gegebenenfalls spektral selektiv, absorbierende und insgesamt strahlungsundurchlässige Trennschicht 21' voneinander geschieden, die als dünne Beschichtung, Film oder Folie ausgebildet sein kann. Die Luftschicht der transparenten äußeren Wärmedämmschicht 30 kann unmittelbar an die Trennschicht 21' grenzen. Es kann aber auch eine in der Zeichnung nicht dargestellte transparente Platte, insbesondere eine Glasscheibe, zwischen der Luftschicht und der Trennschicht 21' eingeschaltet sein und Teil der transparenten äußeren Wärmedämmschicht 30 bilden.

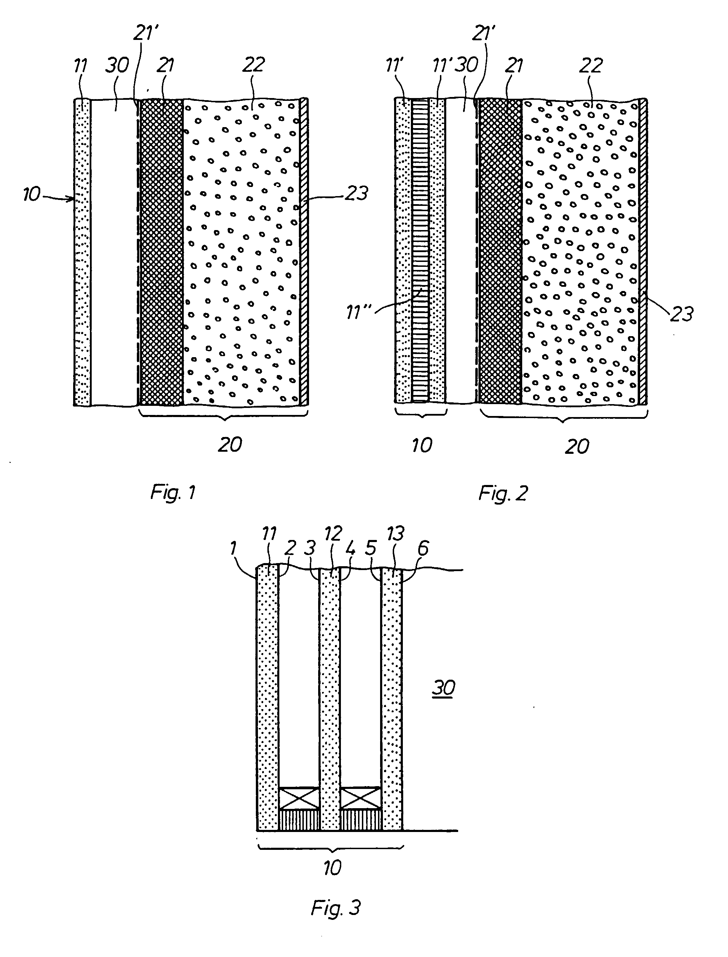

Die außenseitige Wandschale 10 ist durch eine Verglasung gebildet, die zur Verringerung des g-Wertes mit einer oder mehreren Sonnenschutzbeschichtungen versehen sein kann. Die Verglasung kann aus einzelnen Klarglasscheiben oder aus Isolierglaselementen aus jeweils zwei oder mehr Klarglasscheiben bestehen. Soweit die Verglasung von einzelnen Glasscheiben 11 gebildet ist, können diese außer den schon erwähnten Sonnenschutzbeschichtungen mit innenseitiger Wärmeschutz-, insbes. L-E-Beschichtung versehen sein, die einen niedrigen k-Wert ergeben. Soweit die Verglasung von Isolierglaselementen aus jeweils zwei oder drei Glasscheiben 11, 12, 13 gebildet ist, wobei die Isolierglaselemente reduzierte und/oder mit Edelgas gefüllte Scheibenzwischenräume besitzen können, können die Glasscheiben 11, 12, 13 zusätzlich zu Sonnenschutzbeschichtungen (im allgemeinen auf den Positionen 1 oder 2) auch auf einzelnen, mehreren oder allen Scheibenseiten Wärmeschutzbeschichtungen, insbesondere L-E-Schichten, aufweisen, wobei an den offenliegenden Scheibenflächen die L-E-Schichten von pyrolytisch aufgebrachten Zinnoxidschichten gebildet sein können. Im Ergebnis empfehlen sich im Rahmen der Erfindung zur jeweils optimalen Anpassung des k-Wertes und des g-Wertes an die jeweils bestehenden Erfordernisse, nämlich hinsichtlich der an der absorbierenden Trennschicht 21' und an der Wandinnenoberfläche auftretenden Maximaltemperaturen Tₜₘₐₓ und Tₒᵢₘₐₓ zweckmäßig die folgenden, anhand der Fig. 3 näher erläuterten Kombinationen:
1. Einscheibenverglasung
   mit einer Sonnenschutzschicht auf Position 1 oder 2 für gewollt reduzierten g-Wert
   oder
   aus einer Wärmeschutz- und Sonnenschutzglasscheibe 11 mit Sonnenschutzschicht auf der Position 1 für gewollt reduzierten g-Wert und einer L-E-Schicht auf der Position 2.
2. Zweischeibenisolierverglasung aus zwei Glasscheiben 11, 12 beispielsweise
   Sonnenschutzschicht auf Position 1 oder 2,
   oder
   Sonnenschutzschicht auf Position 1 oder 2, Wärmeschutzschicht (L-E) auf Position 3,
   oder
   Sonnenschutzschicht auf Position 1 oder 2, Wärmeschutzschicht (L-E) auf den Positionen 3 und 4, wobei die Wärmeschutzschicht auf Position 4 aus einer pyrolytisch aufgebrachten Zinnoxidschicht besteht,
   oder
   Sonnenschutz- plus Wärmeschutzschicht auf Position 2
   oder
   Sonnenschutzschicht plus Wärmeschutzschicht auf Position 2, Wärmeschutzschicht (K) auf Position 4,
   jeweils mit oder ohne Edelgasfüllung in den Scheibenzwischenräumen.
3. Dreischeibenisolierverglasung aus Glasscheiben 11, 12, 13 mit
   Sonnenschutzschicht auf Position 2,
   Wärmeschutzschicht auf Position 3,
   Wärmeschutzschicht auf Position 5,
   oder
   Sonnenschutzschicht auf Position 2,
   Wärmeschutzschicht auf Position 3,
   Wärmeschutzschicht auf Position 5,
   Wärmeschutzschicht auf Position 6,
   oder
   Sonnen- und Wärmeschutzschicht auf Position 2,
   Wärmeschutzschicht auf Position 5
   oder
   Sonnen- und Wärmeschutzschicht auf Position 2,
   Wärmeschutzschicht auf Position 5,
   Wärmeschutzschicht auf Position 6.
jeweils mit oder ohne Edelgasfüllung in den Scheibenzwischenräumen.

Die außenseitige Wandschale 10 kann auch entsprechend der Ausführungsform in Fig. 2 aus zwei transparenten Glasscheiben 11' und aus im Scheibenzwischenraum ausgebildeter Prismen- oder zur Scheibenebene etwa senkrechter Wabenstruktur 11" bestehen.

Die zulässigen Zuordnungen von Rₐ, alpha, g und Rᵢ für süd- und westorientierte Wandflächen sind in den Tabellen 1 und 2 in der schon früher erläuterten Weise, zusammengestellt. Zwischen den zu gegebenem alpha, Rₐ und g jeweils angegebenen beiden Grenzwerten kann Rᵢ frei gewählt werden. Die von Fall zu Fall erreichbare Nutzung der Solarenergie ist in der letzten Spalte von Tabelle 2 bewertet, wobei die Bewertung auf folgender Grundlage mit k_{statisch} =1/R_{g} beruht:

Maßstab ist jeweils eine südorientierte Wand
x = gut (k_{equ} = 0,16 - 0,25 W/m²K, k_{equ} ≤ 1/2 k_{statisch})
xx = sehr gut (k_{equ} = 0,06 - 0,15 W/m²K, k_{equ} ≤ 1/3 k_{statisch})
xxx = hervorragend (k_{equ} ≤ 0,05 W/m²K, k_{equ} ≤ 1/8 k_{statisch})

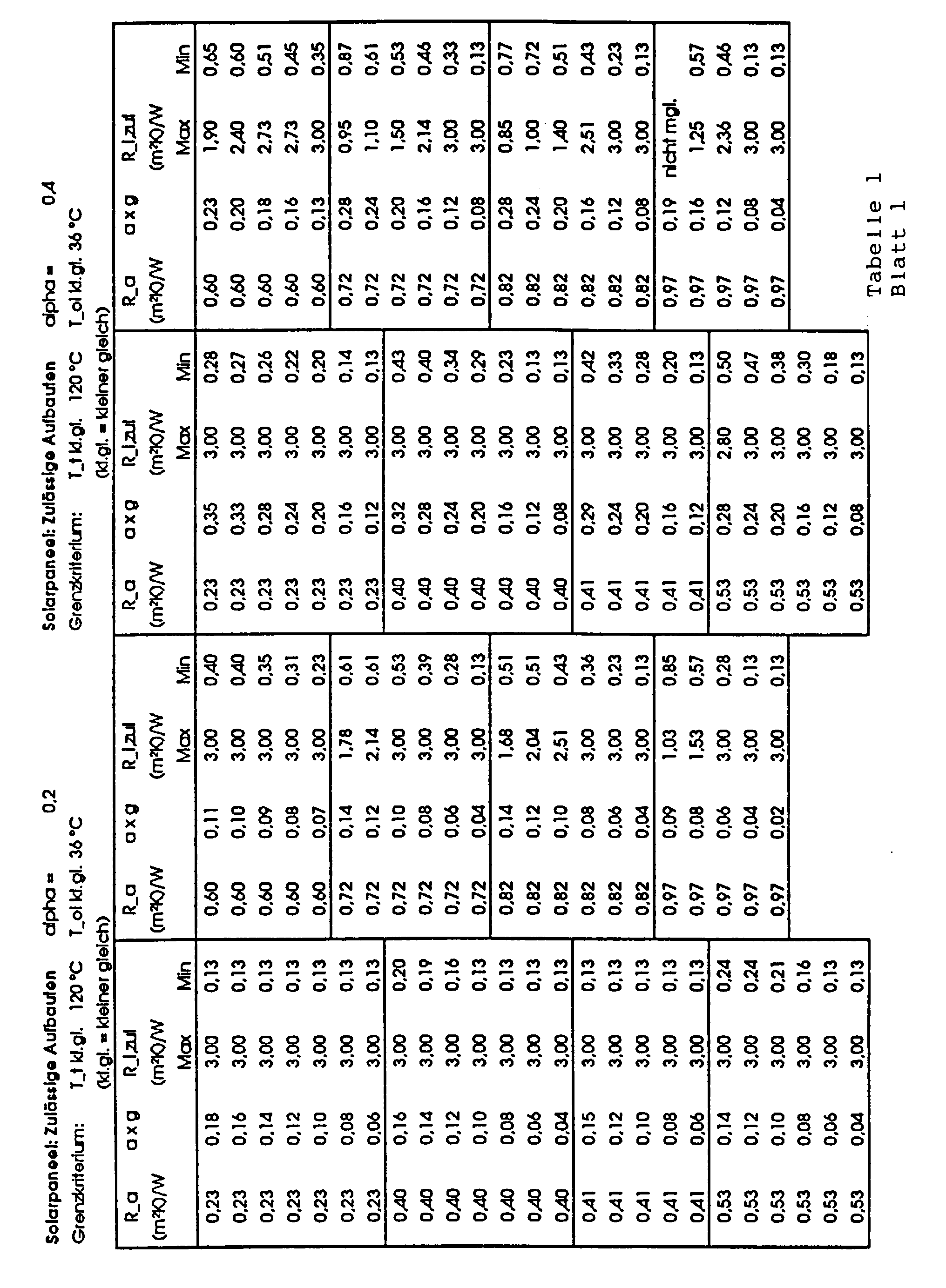

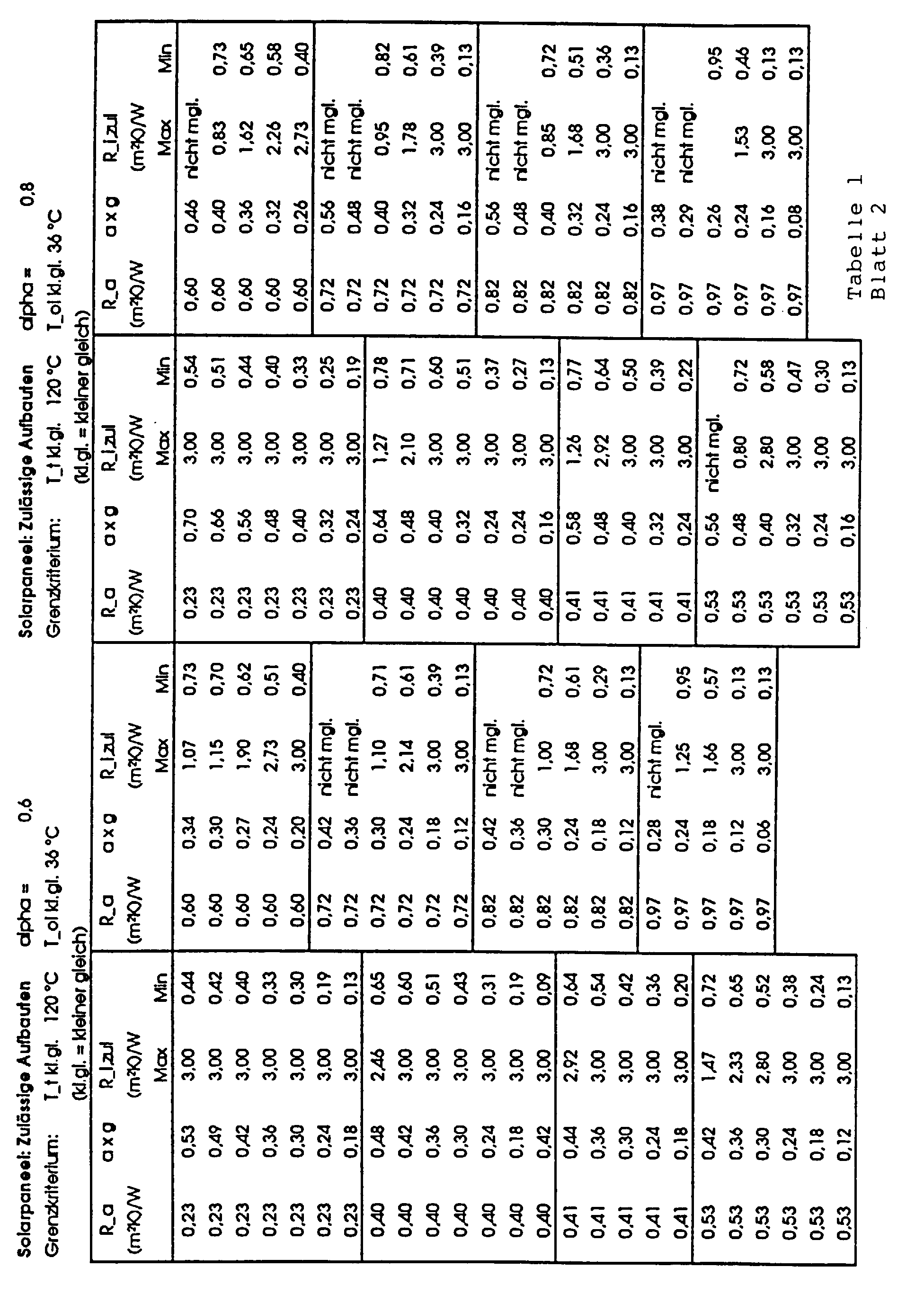

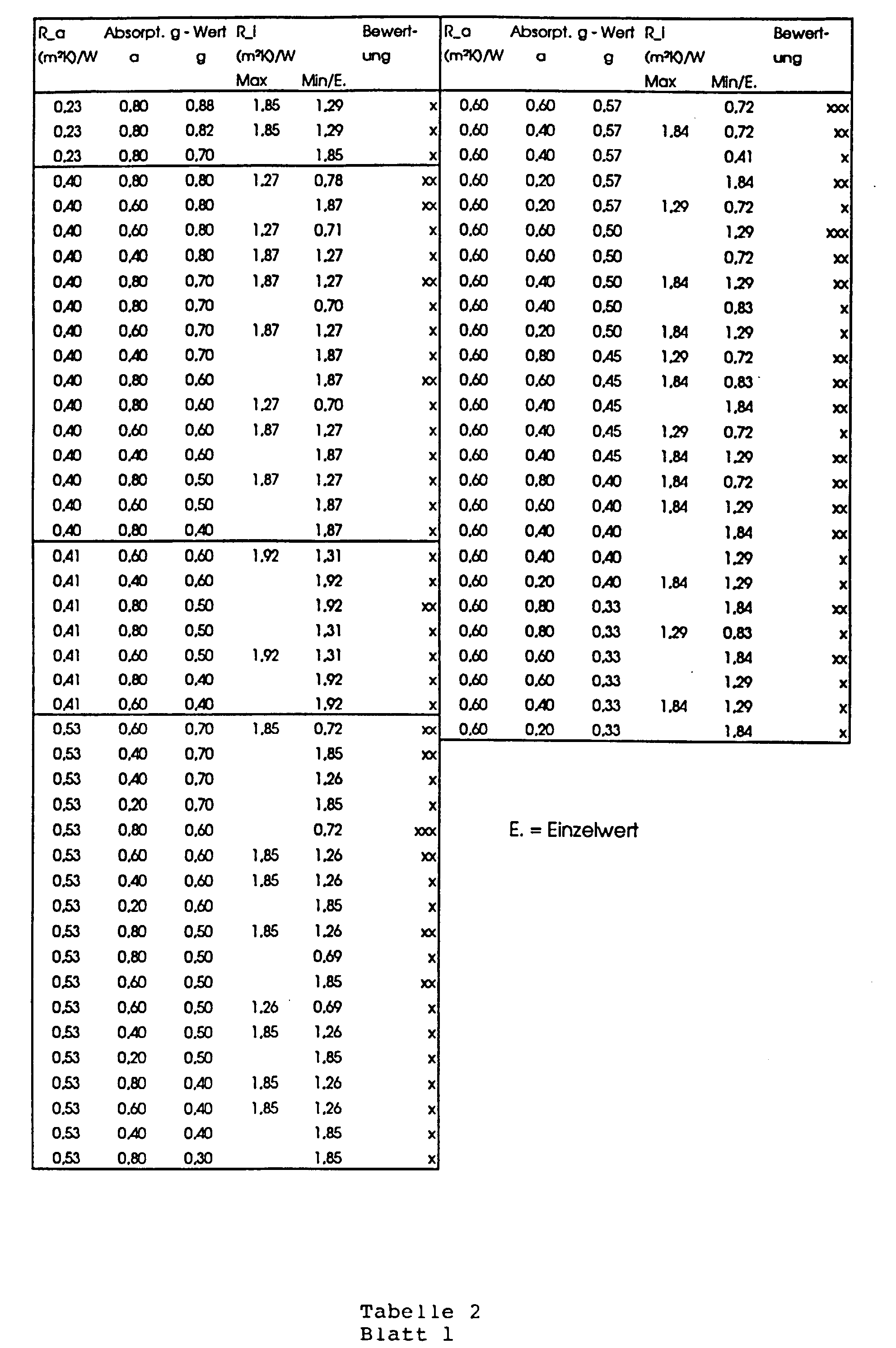

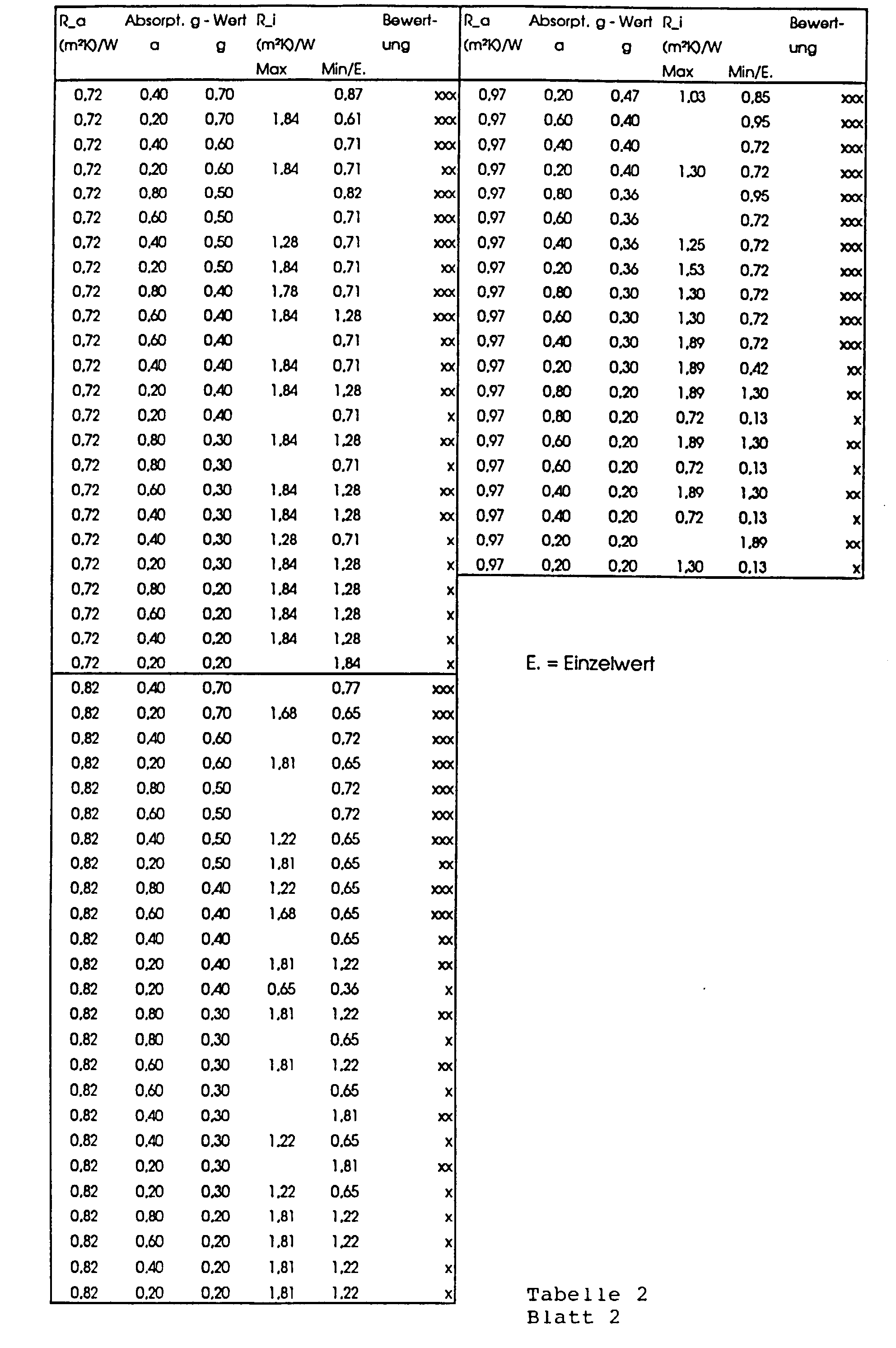

## Patentansprüche

1. Außenwandaufbau an Gebäuden, bei denen zur Nutzung von Solarenergie zwischen einer außenseitigen, für Solarstrahlung durchlässigen (transparenten oder transluzenten) Wandschale (10) und einer innenseitigen Wandschale (20) eine an die außenseitige Wandschale (10) angrenzende äußere, ebenfalls für Solarstrahlung durchlässige, zum Beispiel transparente oder tranzluzente,
Wärmedämmschicht (30) und eine zur innenseitigen Wandschale (20) gehörende innere Wärmedämmschicht (22) vorgesehen sind und zwischen der äußeren Wärmedämmschicht (30) und der inneren Wärmedämmschicht (22) eine weitgehend strahlungsundurchlässige, einen Bruchteil alpha der Solarstrahlung aus der äußeren Wärmedämmschicht (30) absorbierende Trennschicht (21') angeordnet ist, wobei die Summe R_{g} des von der außenseitigen Wandschale (10) und der äußeren Wärmedämmschicht (30) gebildeten Wärmedurchgangswiderstandes Rₐ und des von der innenseitigen Wandschale (20) mit ihrer inneren Wärmedämmschicht (22) gebildeten Wärmedurchgangswiderstands Rᵢ einen Mindestwert R_{gmin} besitzt, der so groß ist, daß bei fehlender Sonneneinstrahlung und der zu erwartenden minimalen Außenlufttemperatur (Winter/Nacht) die Temperatur an der Wandinnenoberfläche des Wandaufbaus einen bezüglich Behaglichkeit und Tauwasserrisiko minimalen Wert nicht unterschreitet, dadurch gekennzeichnet, daß der von der außenseitigen Wandschale (10) und der äußeren Wärmedämmschicht (30) gebildete Wärmedurchgangswiderstand Rₐ und deren Gesamtenergiedurchlaßgrad g, ferner der Absorptionsgrad alpha an der Trennschicht (21') und der von der innenseitigen Wandschale (20) mit ihrer inneren Wärmedämmschicht (22) gebildete Wärmedurchgangswiderstand Rᵢ so aufeinander abgestimmt sind, daß bei der am Einbauort zu erwartenden größtmöglichen Solareinstrahlung qₛₘₐₓ und der zu erwartenden maximalen sommerlichen Außentemperatur Tₐₘₐₓ sowohl im Inneren des Wandaufbaus, insbesondere an der Trennschicht (21'), höchstens eine Maximaltemperatur Tₜₘₐₓ entsteht, die von den Werkstoffen im Wandaufbau noch ohne Schädigung ertragen wird, als auch an der Wandinnenoberfläche höchstens eine maximale Temperatur Tₒᵢₘₐₓ entsteht, die von im Rauminneren befindlichen Personen noch als behaglich empfunden wird, wozu bei gegebenen Werten von Rₐ, alpha und alpha*g (* bedeutet hier wie im folgenden das Multiplikationszeichen) eines nach Süden oder Westen orientierten Wandaufbaus die Werte von Rᵢ zwischen den aus nachstehender Tabelle (Tabelle ) zu entnehmenden Grenzen liegen: 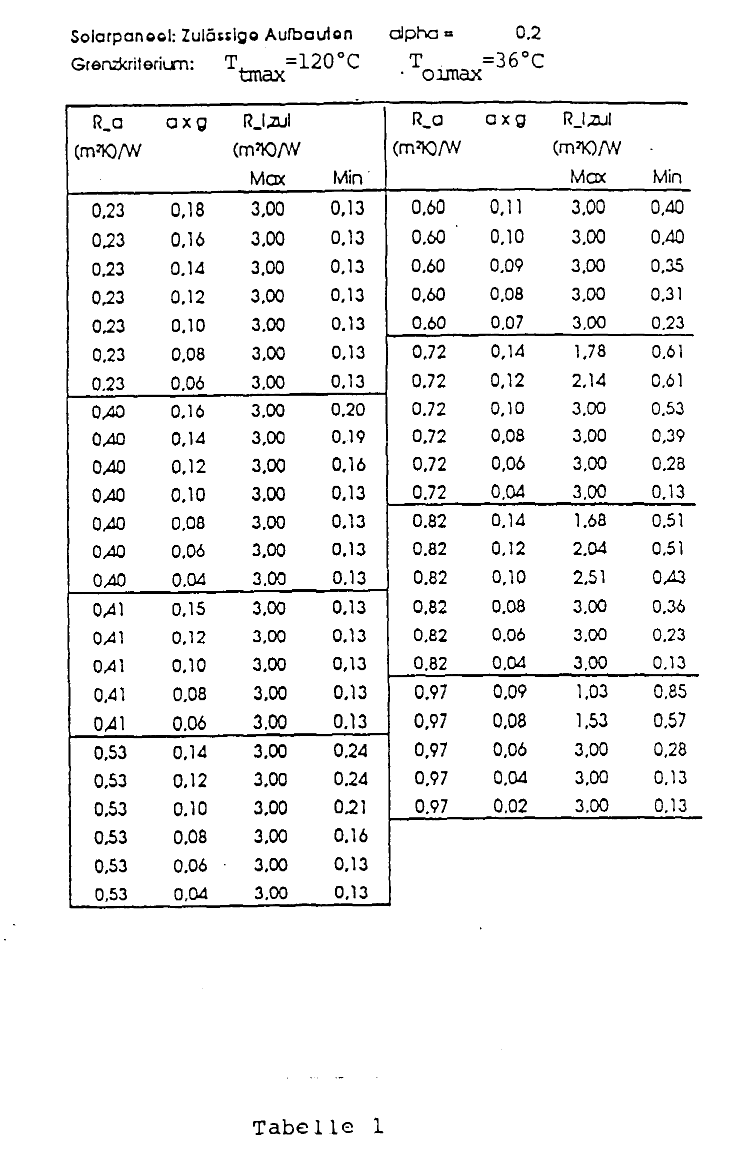 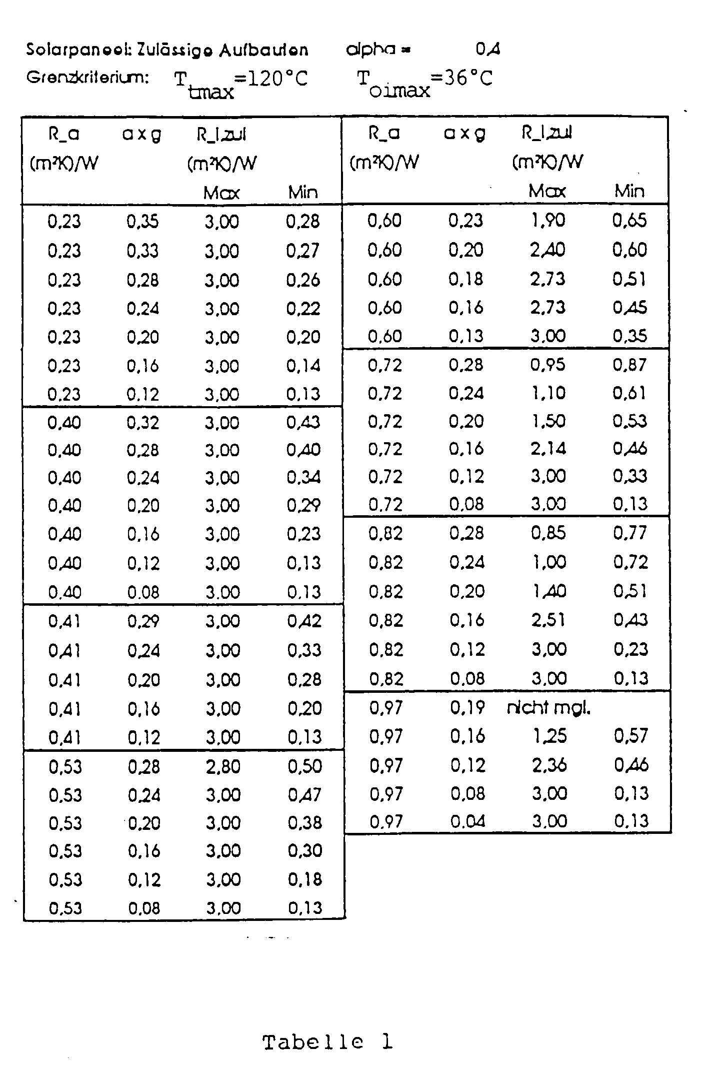 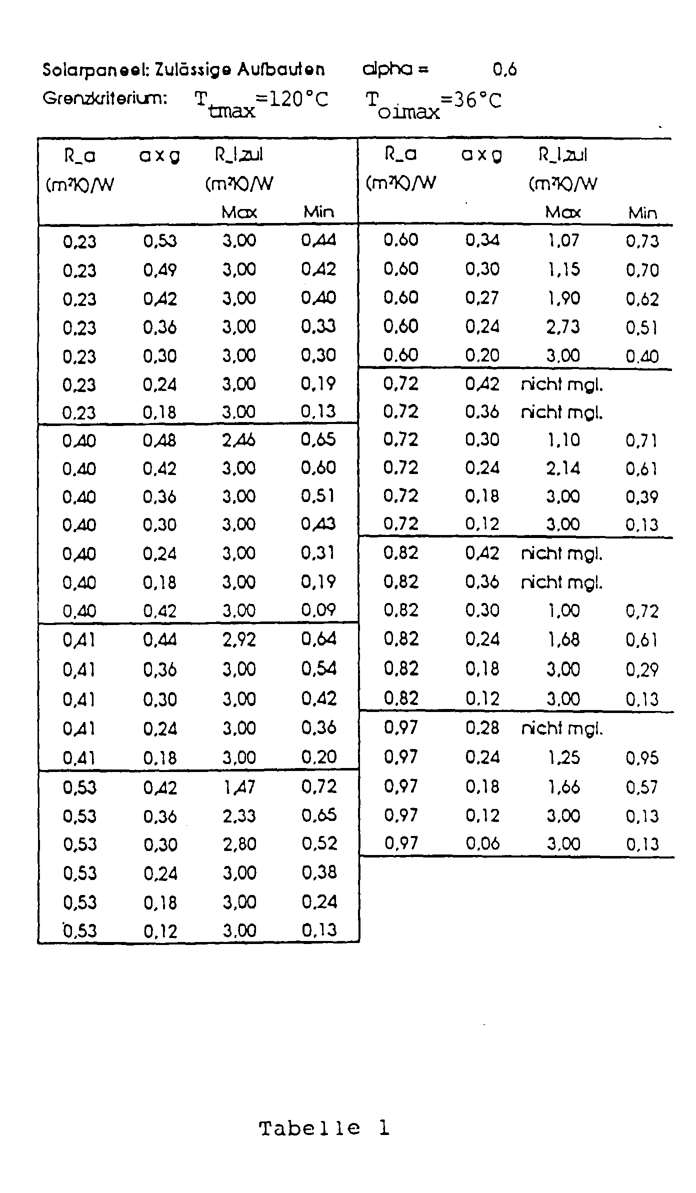 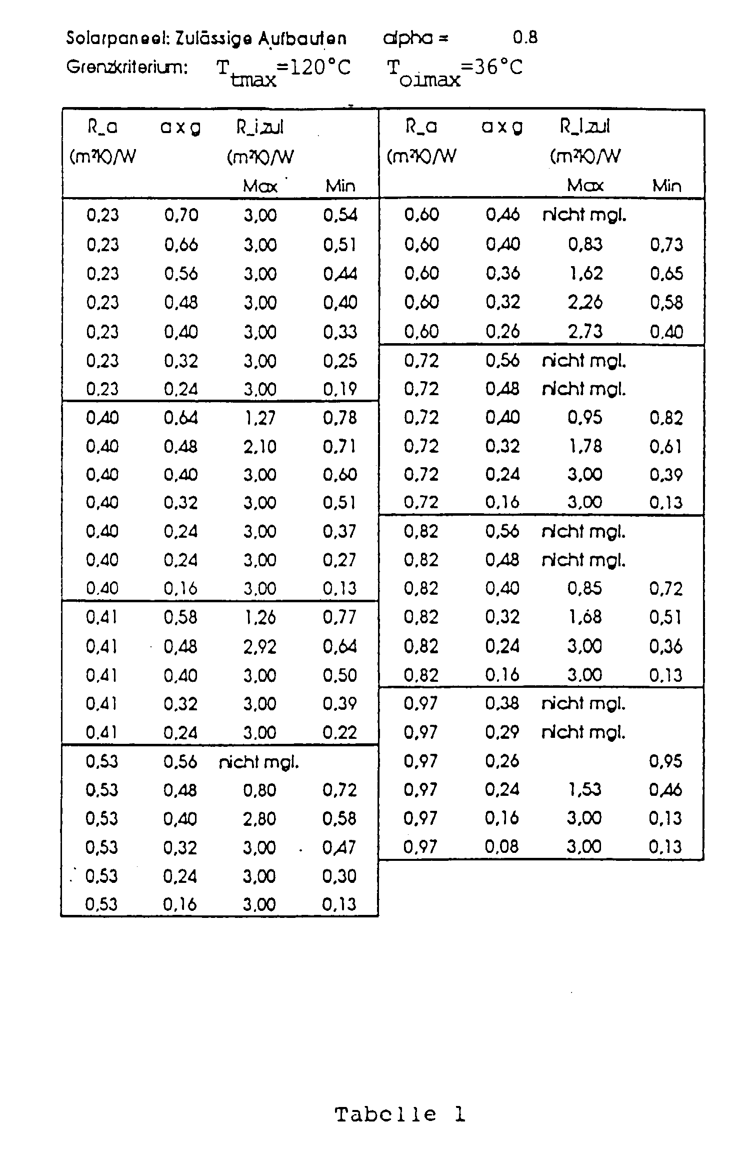 wobei in der Tabelle für alpha gleich 0,2; 0,4; 0,6 und 0,8 jeweils in Abhängigkeit von Rₐ (erste Spalte) und alpha*g (zweite Spalte) der zulässige Maximalwert (dritte Spalte) und Minimalwert (vierte Spalte) für Rᵢ zusammengestellt sind und Zwischenwerte durch Interpolationen ohne weiteres ermittelt werden können.

2. Außenwandaufbau nach Anspruch 1, dadurch gekennzeichnet, daß der Wandaufbau in der nachstehenden Tabelle (Tabelle 2) aufgeführten Werte von alpha*g und Rₐ sowie einen Rᵢ-Wert besitzt, der in dem jeweils zu diesen Werten von alpha*g und R a gehörenden, in der Tabelle 2 angegebenen Rᵢ-Breich liegt:

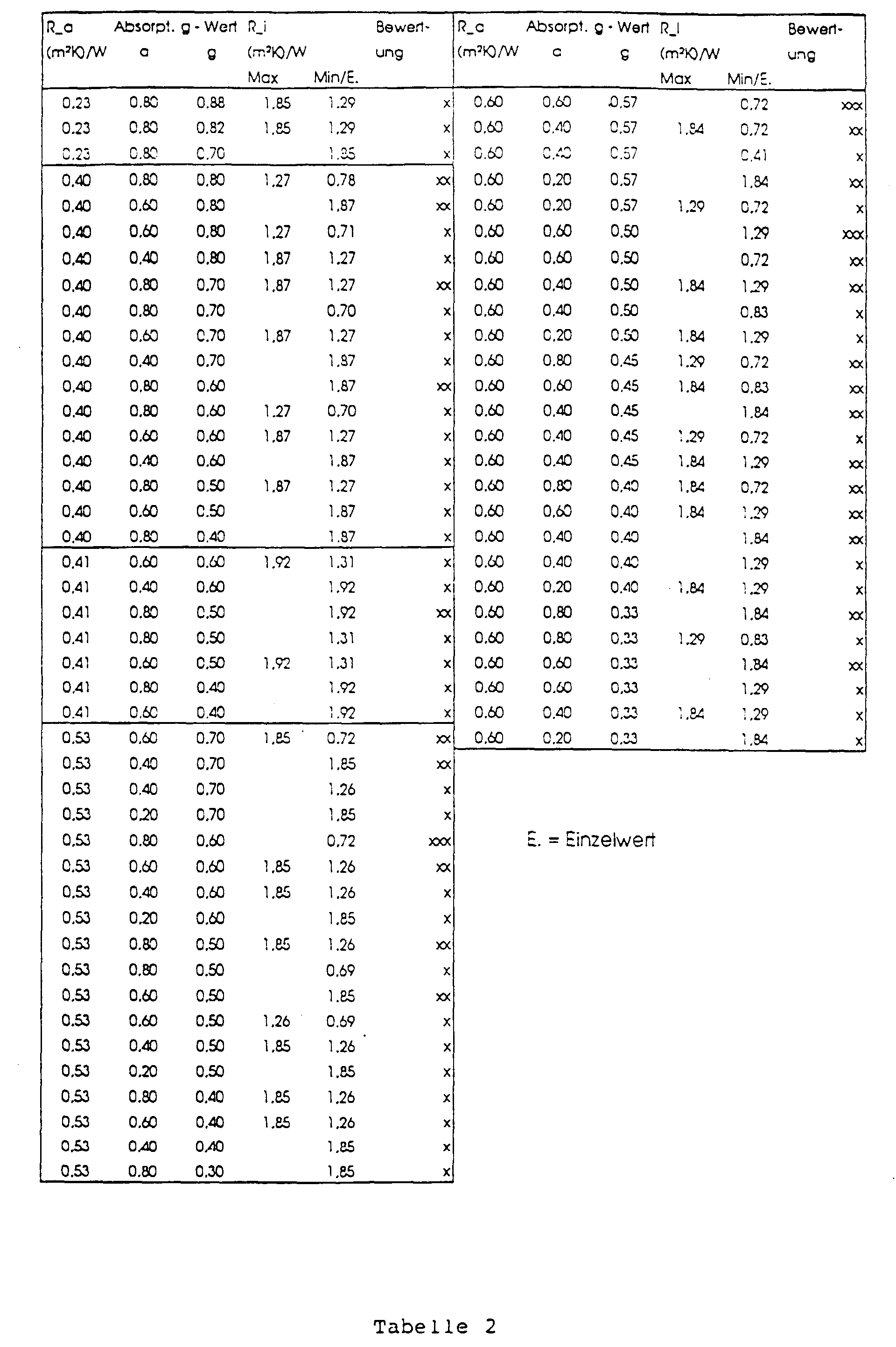

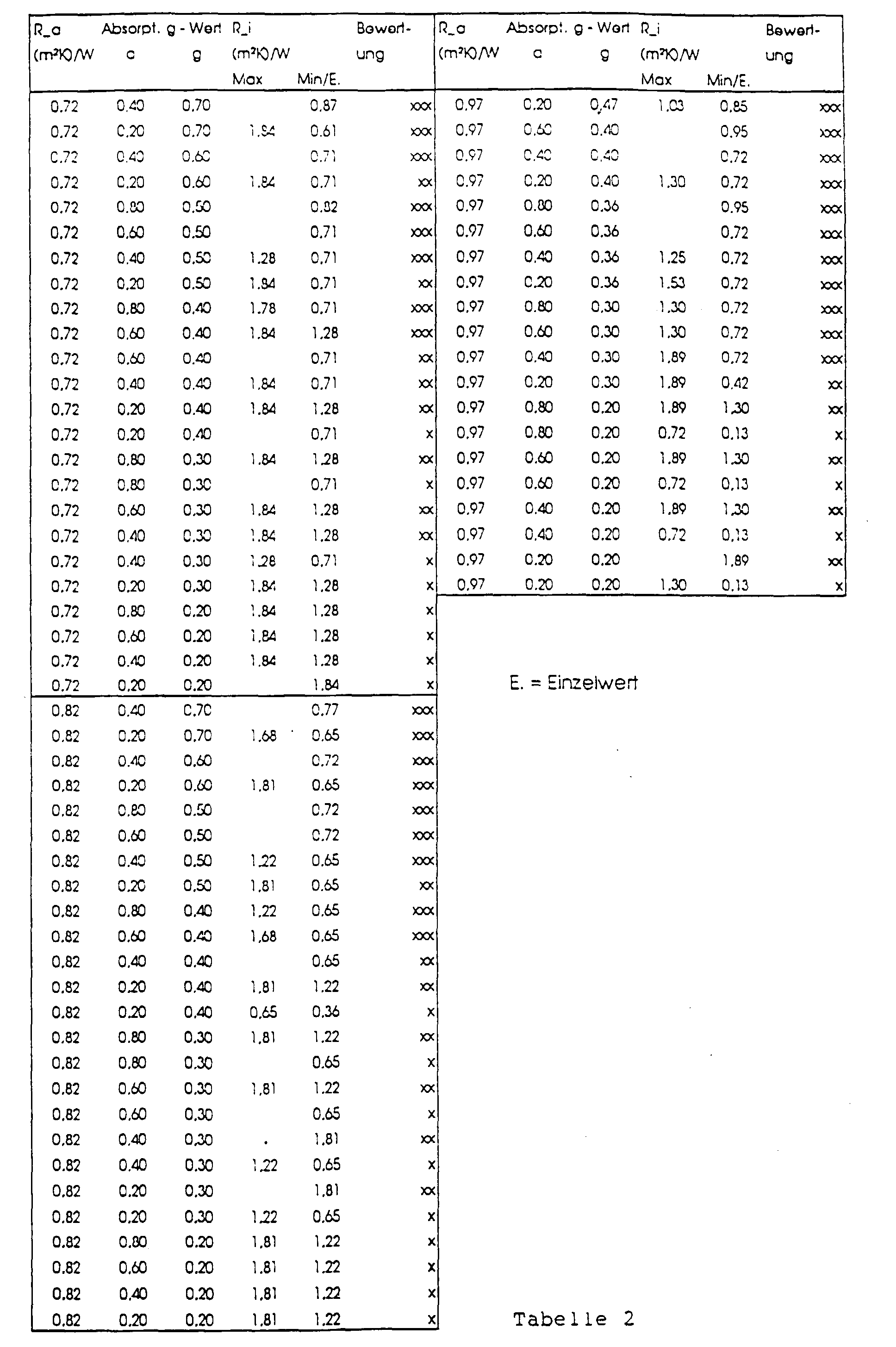

3. Außenwandaufbau nach einem der Ansprüche 1 oder 2, dadurch gekennzeichnet, daß bei der gegenseitigen Abstimmung der Größen Rₐ, Rᵢ, alpha und alpha*g der zu erwartende höchstmögliche Wert qₛₘₐₓ der Sonneneinstrahlung für diejenige Himmelsrichtung angesetzt wird, die der Richtungsorientierung des Außenwandaufbaus am Gebäude entspricht.

4. Außenwandaufbau nach einem der Ansprüche 1 bis 3, dadurch gekennzeichnet, daß die außenseitige Wandschale (10) von einer Verglasung und die äußere transparente Wärmedämmschicht (30) von einer Luftschicht in einer Schichtdicke von 5 bis 50 mm, vorzugsweise 20 mm, gebildet ist.

5. Außenwandaufbau nach Anspruch 4, dadurch gekennzeichnet, daß bei einer Verglasung mit zwei oder mehr Glasscheiben die äußere Wärmedämmschicht (30) zwischen den Glasscheiben ausgebildet ist.

6. Außenwandaufbau nach Anpruch 5, dadurch gekennzeichnet, daß die Verglasung von einer einzelnen Glasscheibe (11), gegebenenfalls mit innenseitiger Wärmeschutz-, insbes. L-E-Schicht und/oder einer Sonnenschutzschicht gebildet ist.

7. Außenwandaufbau nach Anspruch 5, dadurch gekennzeichnet, daß die Verglasung von Isolierglaselementen mit jeweils zwei oder drei Glasscheiben (11, 12, 13) gebildet ist.

8. Außenwandaufbau nach Anspruch 7, dadurch gekennzeichnet, daß die Isolierglaselemente reduzierte Scheibenzwischenräume in der Größenordnung von 4 bis 8 mm aufweisen.

9. Außenwandaufbau nach Anspruch 7 oder 8, dadurch gekennzeichnet, daß die Glasscheiben (11, 12, 13) auf einzelnen, mehreren oder allen Positionen (1 bis 6) Wärmeschutzbeschichtungen, insbes. L-E-Schichten, aufweisen.

10. Außenwandaufbau nach einem der Ansprüche 7 bis 9, dadurch gekennzeichnet, daß die Isolierglaselemente bzw. ihre Glasscheiben (11, 12, 13) mit Sonnenschutzschichten ausgestattet sind.

11. Außenwandaufbau nach einem der Ansprüche 7 bis 10, dadurch gekennzeichnet, daß die Scheibenzwischenräume der Isolierglaselemente Edelgasfüllungen aufweisen.

12. Außenwandaufbau nach einem der Ansprüche 1 bis 11, dadurch gekennzeichnet, daß die innenseitige Wandschale (20) eine Wärmespeicherschicht (21) enthält, die auf der der äußeren transparenten Wärmedämmschicht (30) abgewandten Seite der Trennschicht (21') angeordnet ist.

13. Außenwandaufbau nach Anspruch 12, dadurch gekennzeichent, daß sich die Wärmespeicherschicht (21) zwischen der Trennschicht (21') und der inneren Wärmedämmschicht (22) befindet.

14. Außenwandaufbau nach Anspruch 12, dadurch gekennzeichnet, daß die innenseitige Abschlußschicht (23) als die Wärmespeicherschicht ausgebildet ist.

## Claims

1. An external wall structure on buildings in which to make use of solar energy provided between an outside wall shell (10) which is solar radiation-transmissive (transparent or translucent) and an inside wall shell (20) are an outer heat-insulating layer (30) which adjoins the outside wall shell (10) and which is also solar radiation-transmissive, for example transparent or translucent, and an inner heat-insulating layer (22) belonging to the inside wall shell (20), and arranged between the outer heat-insulating layer (30) and the inner heat-insulating layer (22) is a substantially radiation-impervious separating layer (21') which absorbs a fraction alpha of the solar radiation from the outer heat-insulating layer (30), wherein the sum R_{g} of the heat transfer resistance Rₐ formed by the outside wall shell (10) and the outer heat-insulating layer (30) and the heat transfer resistance Rᵢ formed by the inside wall shell (20) with its inner heat-insulating layer (22) has a minimum value R_{gmin} which is of such a magnitude that in the absence of incident solar radiation and at the minimum outside air temperature to be expected (winter/night) the temperature at the wall inside surface of the wall structure does not go below a value which is a minimum value in respect of comfortableness and dew water risk, characterised in that the heat transfer resistance R formed by the outside wall shell (10) and the outer heat-insulating layer (30), and the total degree g of energy transmission thereof, and also the degree of absorption alpha at the separating layer (21') and the heat transfer resistance Rᵢ formed by the inside wall shell (20) with its inner heat-insulating layer (22) are so matched to each other that with the highest possible incident solar radiation qₛₘₐₓ to be expected at the location of installation and the maximum summer outside temperature T to be expected, both in the interior of the wall structure and in particular at the separating layer (21') there is at most a maximum temperature Tₜₘₐₓ which is still tolerated by the materials in the wall structure without damage and also at the wall inside surface there is at most a maximum temperature Tₒᵢₘₐₓ which is still perceived as comfortable by persons in the interior of the room, for which purpose with given values of Rₐ, alpha and alpha*g (* denotes here as hereinafter the multiplication sign) of a wall structure which is oriented towards the south or the west the values of Rᵢ lie between the limits to be found in the following table (Table): 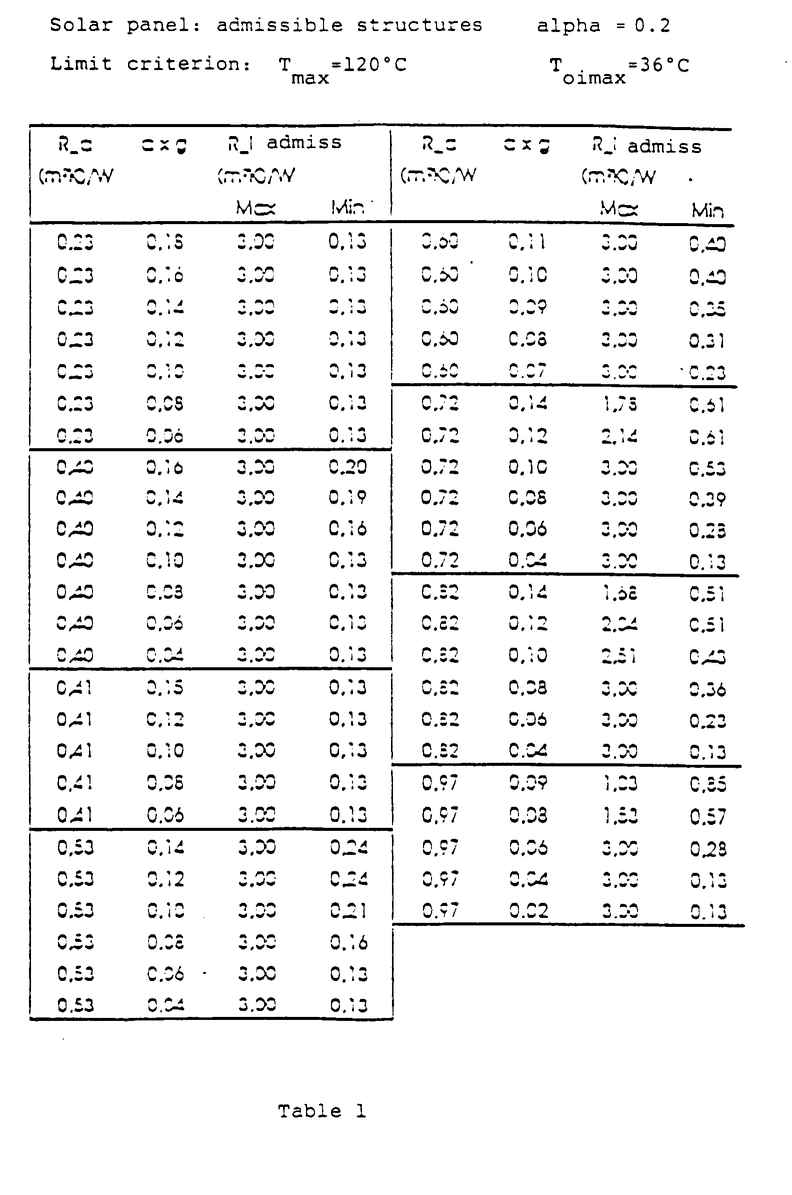 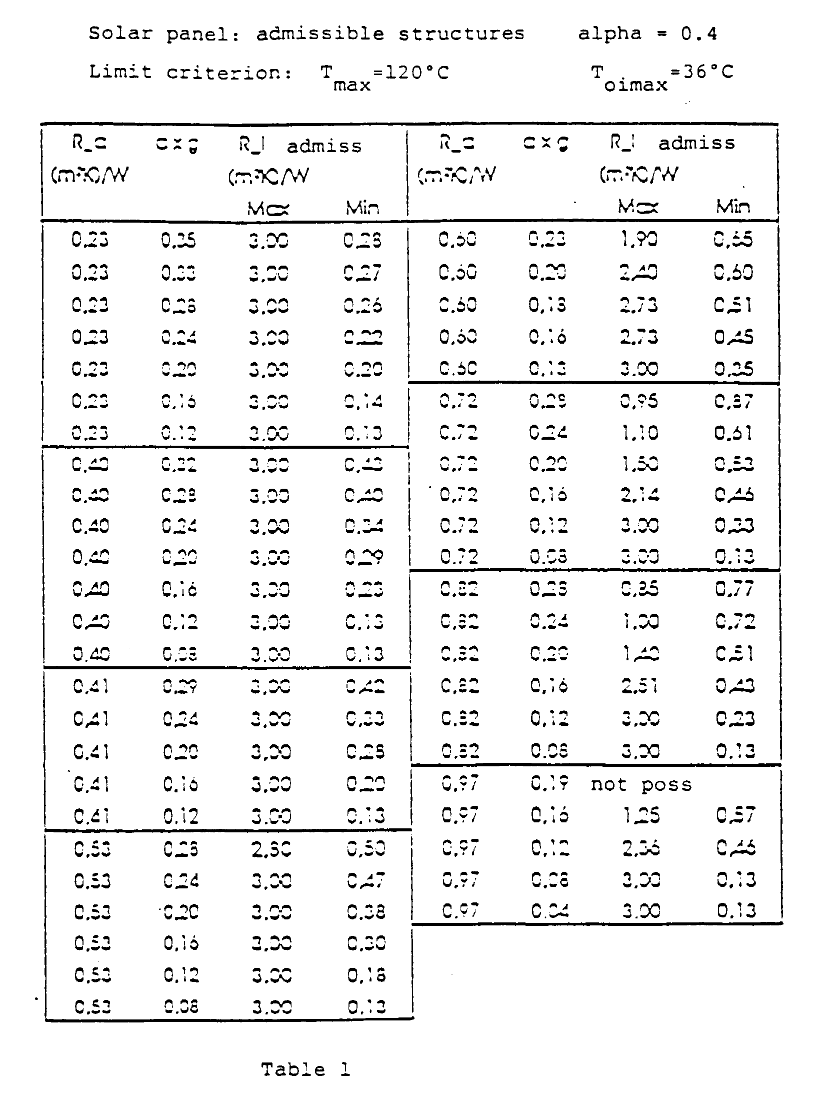 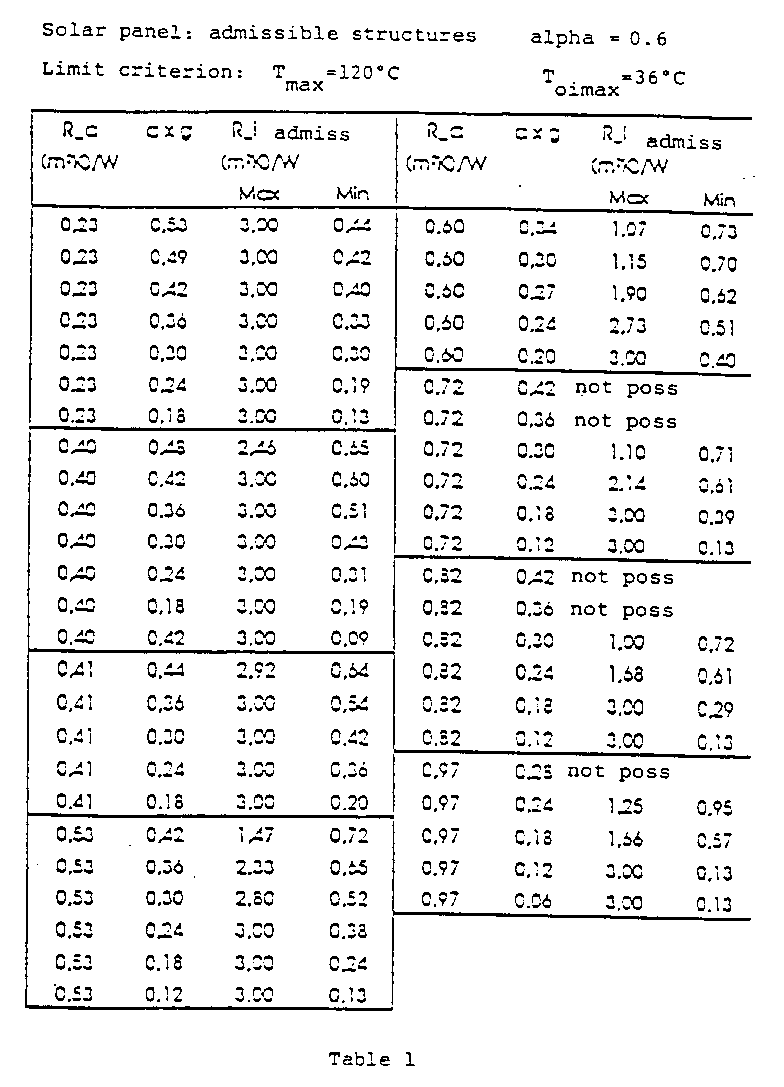 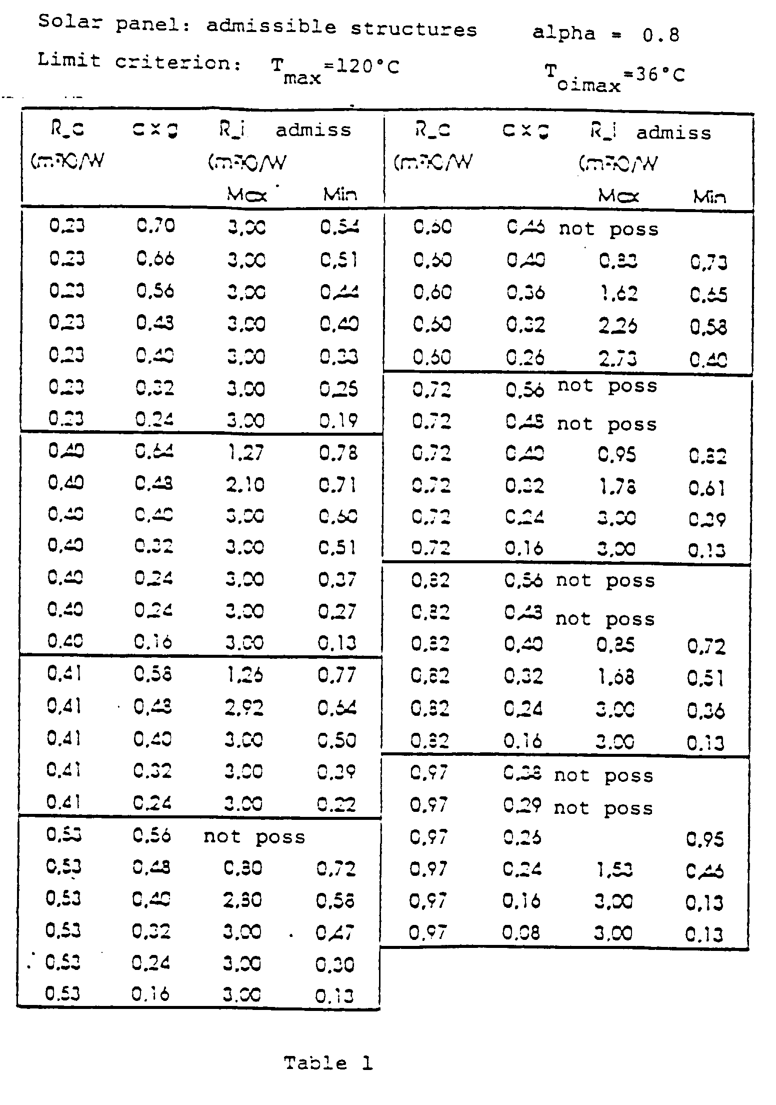 wherein in the Table for alpha equal to 0.2: 0.4; 0.6; and 0.8 in each case in dependence on Rₐ (1st column) and alpha*g (2nd column) the admissible maximum value (3rd column) and minimum value (4th column) for Rᵢ are put together and intermediate values can be readily ascertained by interpolation operations.

2. An external wall structure according to claim 1 characterised in that the wall structure has values listed in the following table (Table 2) of alpha*g and R and an Rᵢ-value which is in the Rᵢ-range specified in Table 2 and respectively belonging to said values of alpha*g and Rₐ:

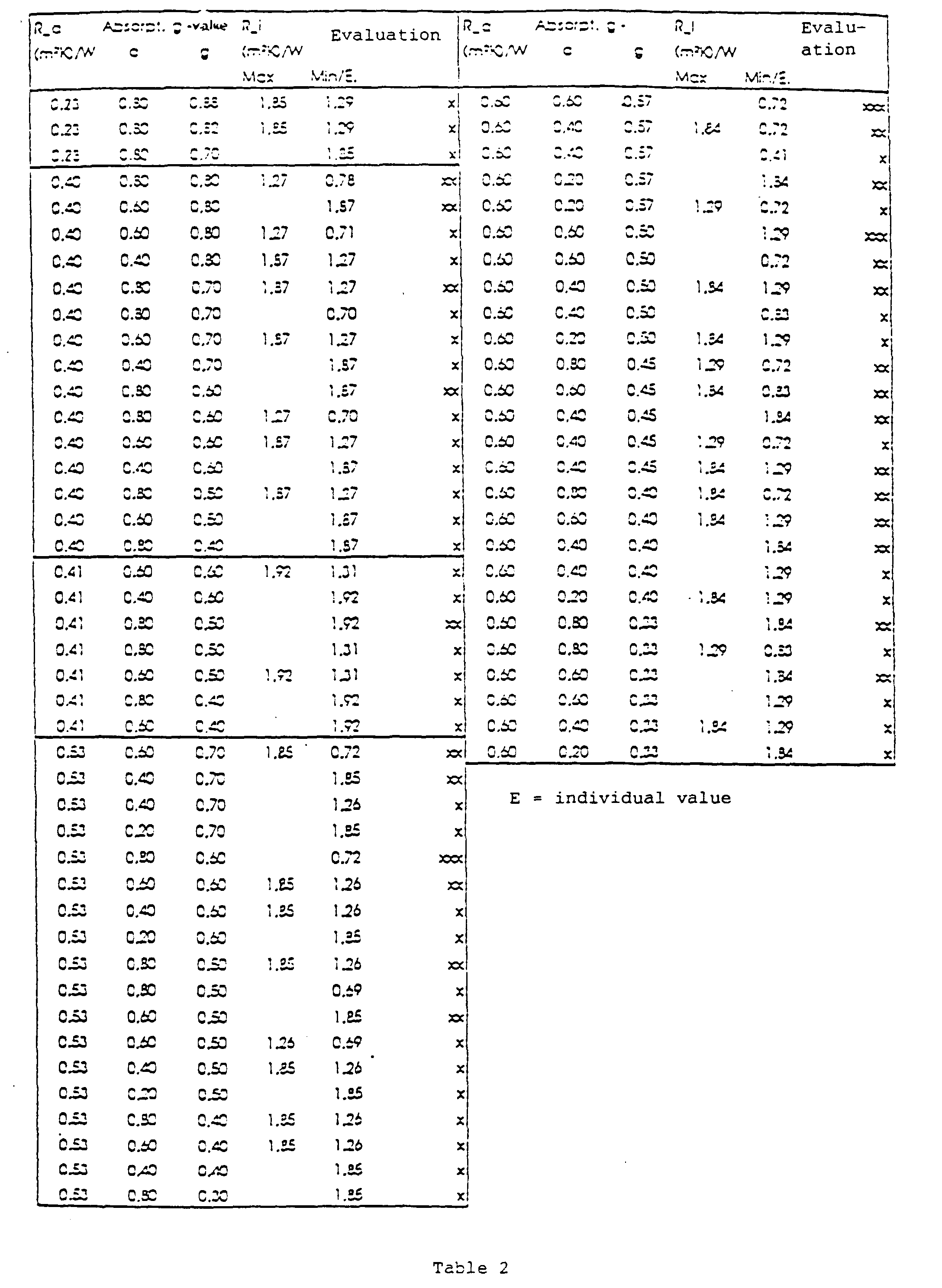

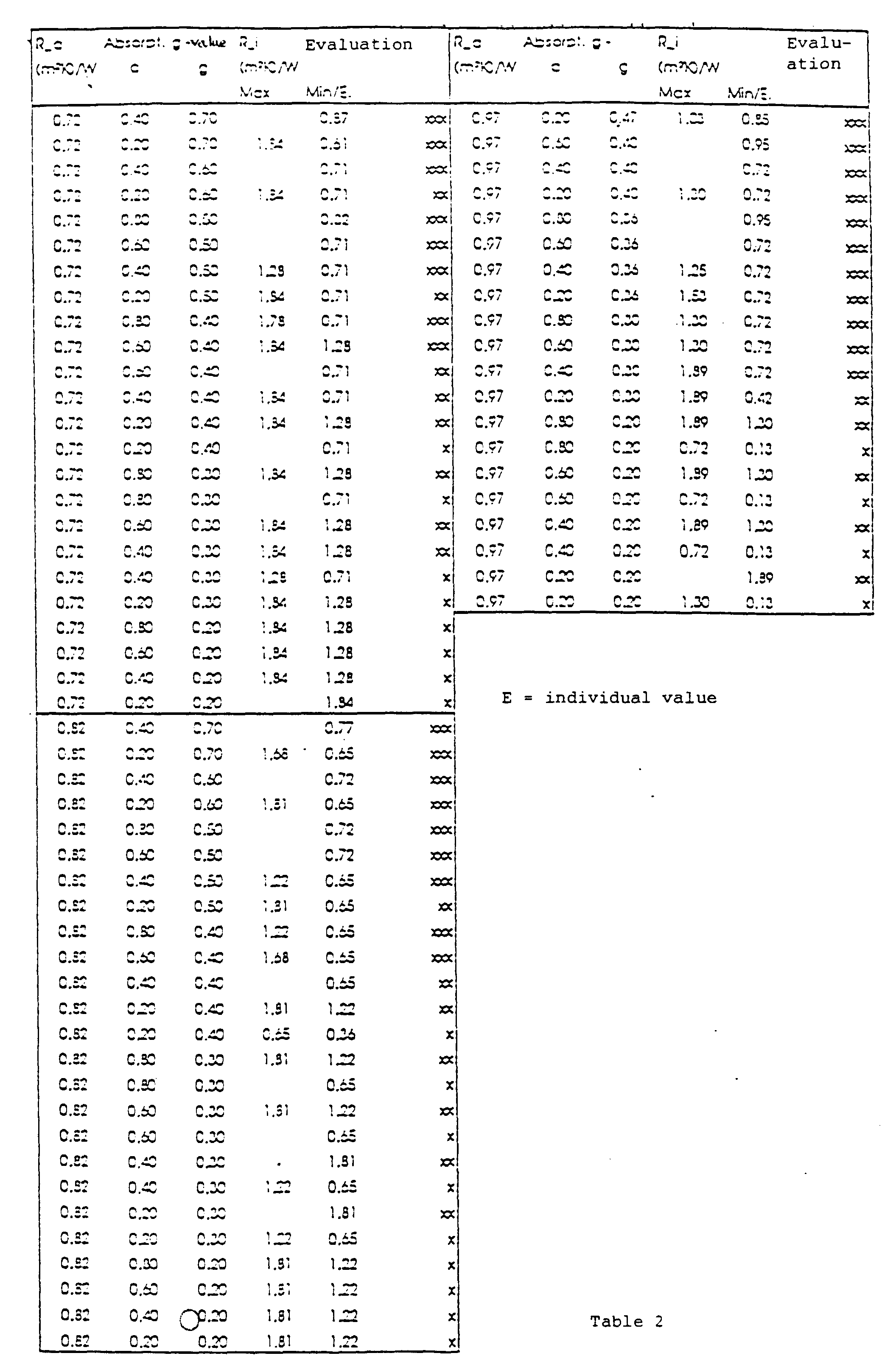

3. An external wall structure according to one of claims 1 and 2 characterised in that with mutual matching of the parameters Rₐ, Rᵢ, alpha and alpha*g the highest possible value q smax to be expected in respect of incident solar radiation is set for that direction which corresponds to the directional orientation of the external wall structure on the building.

4. An external wall structure according to one of claims 1 to 3 characterised in that the outside wall shell (10) is formed by a glazing arrangement and the outer transparent heat-insulating layer (30) is formed by a layer of air of a thickness of from 5 to 50 mm, preferably 20 mm.

5. An external wall structure according to claim 4 characterised in that in the case of glazing with two or more glass panes the outer heat-insulating layer (30) is provided between the glass panes.

6. An external wall structure according to claim 5 characterised in that the glazing is formed by a single glass pane (11), possibly with an inside heat-insulation, in particular L/E-layer and/or a sun protection layer.

7. An external wall structure according to claim 5 characterised in that the glazing is formed by insulating glass elements each having two or three glass panes (11, 12, 13).

8. An external wall structure according to claim 7 characterised in that the insulating glass elements have reduced inter-pane spaces of the order of magnitude of from 4 to 8 mm.

9. An external wall structure according to claim 7 or claim 8 characterised in that the glass panes (11, 12, 13) have heat-insulation coatings, in particular L-E-layers, on individual, a plurality of or all positions (1 to 6).

10. An external wall structure according to one of claims 7 to 9 characterised in that the insulating glass elements or their glass panes (11, 12, 13) are provided with sun protection layers.

11. An external wall structure according to one of claims 7 to 10 characterised in that the inter-pane spaces of the insulating glass elements have inert-gas fillings.

12. An external wall structure according to one of claims 1 to 11 characterised in that the inside wall shell (20) includes a heat-storage layer (21) which is arranged on the side of the separating layer (21'), that is remote from the outer transparent heat-insulating layer (30).

13. An external wall structure according to claim 12 characterised in that the heat-storage layer (21) is between the separating layer (21') and the inner heat-insulating layer (22).

14. An external wall structure according to claim 12 characterised in that the inside cover layer (23) is in the form of the heat-storage layer.

## Revendications

1. Structure extérieure de mur installée dans des bâtiments dans lesquels, pour utiliser l'énergie solaire entre une paroi extérieure (10) transmettant le rayonnement solaire (transparente ou translucide) et une paroi intérieure (20) , sont disposées une couche d'isolation thermique extérieure, qui jouxte la paroi extérieure (10) du mur et transmet également le rayonnement solaire et par exemple est transparente ou translucide, et une couche intérieure d'isolation thermique (22), qui fait partie de la paroi intérieure (20) du mur, et entre la couche extérieure d'isolation thermique (30) et la couche d'isolation thermique (22) est disposée une couche de séparation (21'), qui transmet dans une large mesure le rayonnement et absorbe une fraction alpha du rayonnement solaire provenant de la couche extérieure d'isolation thermique (30), la somme Rₐ de la résistance de transmission de chaleur Rₐ, formée par la paroi extérieure (10) du mur et la couche extérieure d'isolation thermique (30), et de la résistance de transmission de chaleur Rᵢ formée par la paroi intérieure (20) du mur avec sa couche intérieure d'isolation thermique (22) possède une valeur minimale R_{gmin}, qui est suffisamment élevée pour qu'en l'absence d'un rayonnement solaire et d'une température minimale de l'air extérieur à laquelle on peut s'attendre (hiver/nuit), la température au niveau d'une surface intérieure de la structure du mur ne dépasse pas une valeur minimale du point de vue du confort et du risque d'apparition d'eau de condensation, caractérisée en ce que la résistance de transmission de chaleur Rₐ, formée par la paroi extérieure (10) du mur et la couche extérieure d'isolation thermique, et le degré g de transmission globale d'énergie de ces éléments, et en outre le degré d'absorption alpha au niveau de la couche de séparation (21') et la résistance de transmission de chaleur Rᵢ, formée par la paroi intérieure (20) du mur avec sa couche intérieure d'isolation thermique (22), sont accordés entre eux de telle sorte que, dans le cas d'un rayonnement solaire incident maximum possible qₘₐₓ, auquel on peut s'attendre au niveau de l'emplacement de montage, et de la température extérieure maximale en été Tₐₘₐₓ à laquelle on peut s'attendre, il apparaît à l'intérieur de la structure du mur, notamment au niveau de la couche de séparation (21'), au maximum une température maximale Tₜₘₐₓ, qui est encore supportée sans aucun endommagement par les matériaux de la structure du mur, et il apparaît également au niveau de la surface intérieure du mur au maximum une température maximale Tₒᵢₘₐₓ, qui est encore ressentie comme agréable par des personnes situées à l'intérieur d'une pièce, et qu'à cet effet, pour des valeurs données de Rₐ, alpha et alpha*q (* désignant ici dans ce qui suit le signe de multiplication) d'une structure de mur orientée vers le sud ou vers l'ouest, les valeurs de Rᵢ sont situées entre les limites devant être tirées du tableau donné ci-après (tableau 1) : 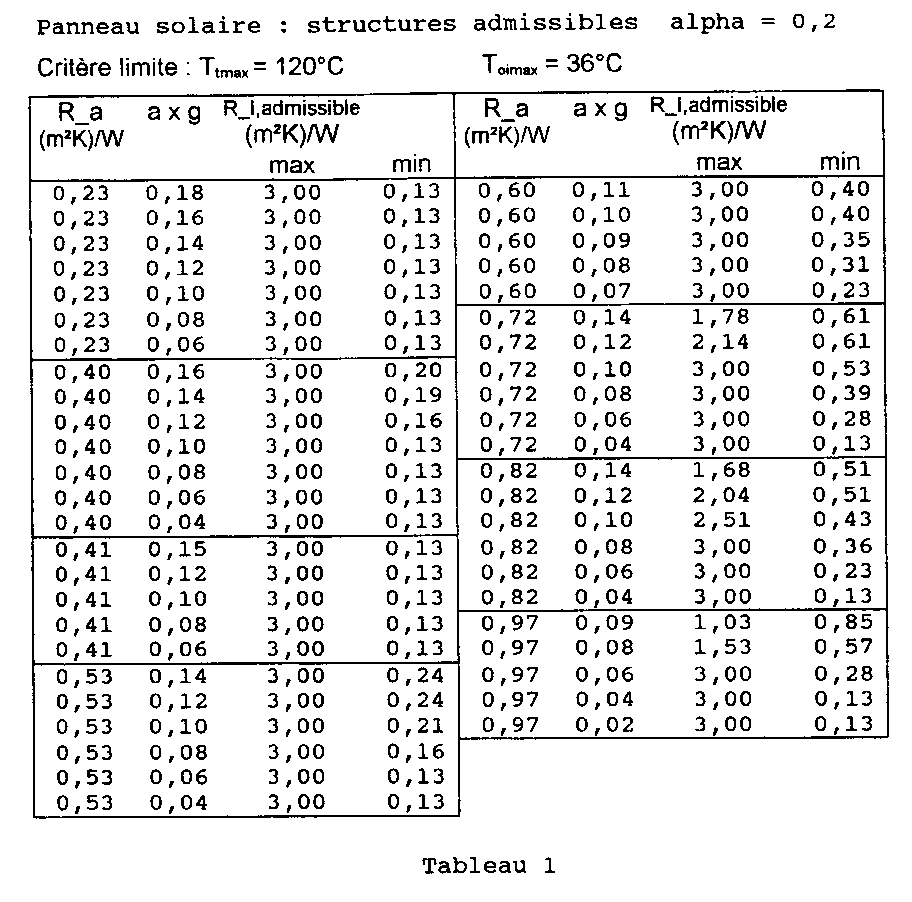 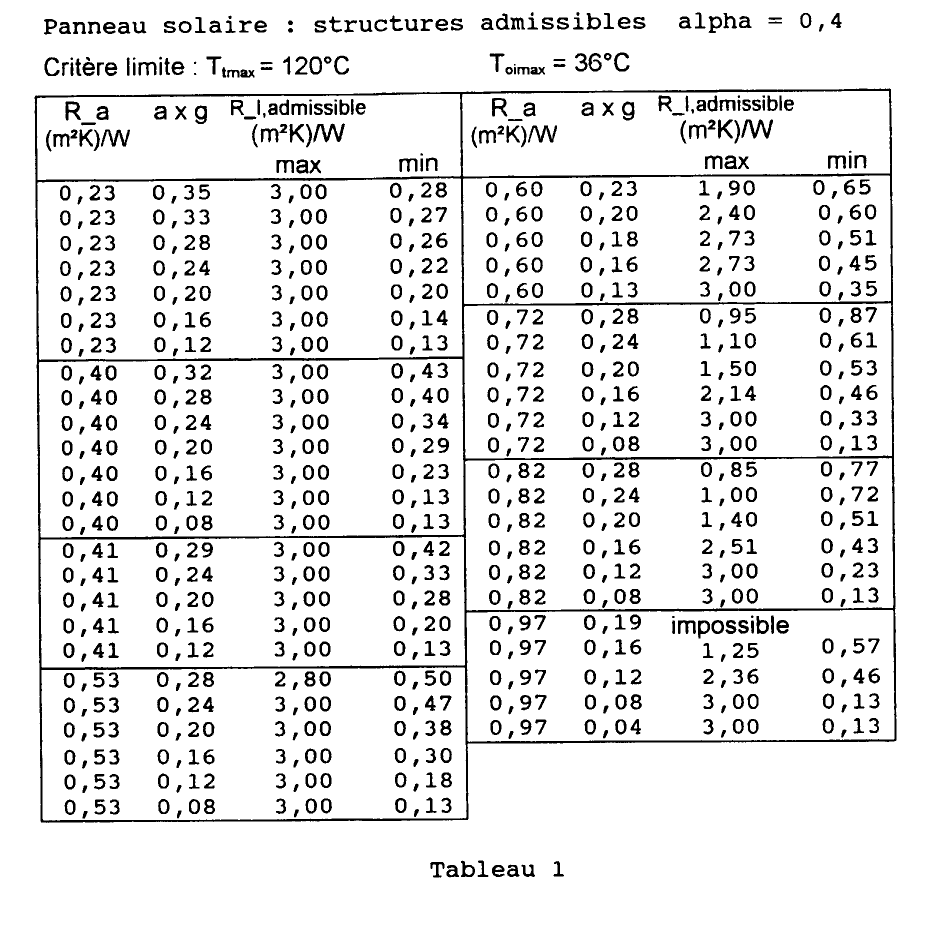 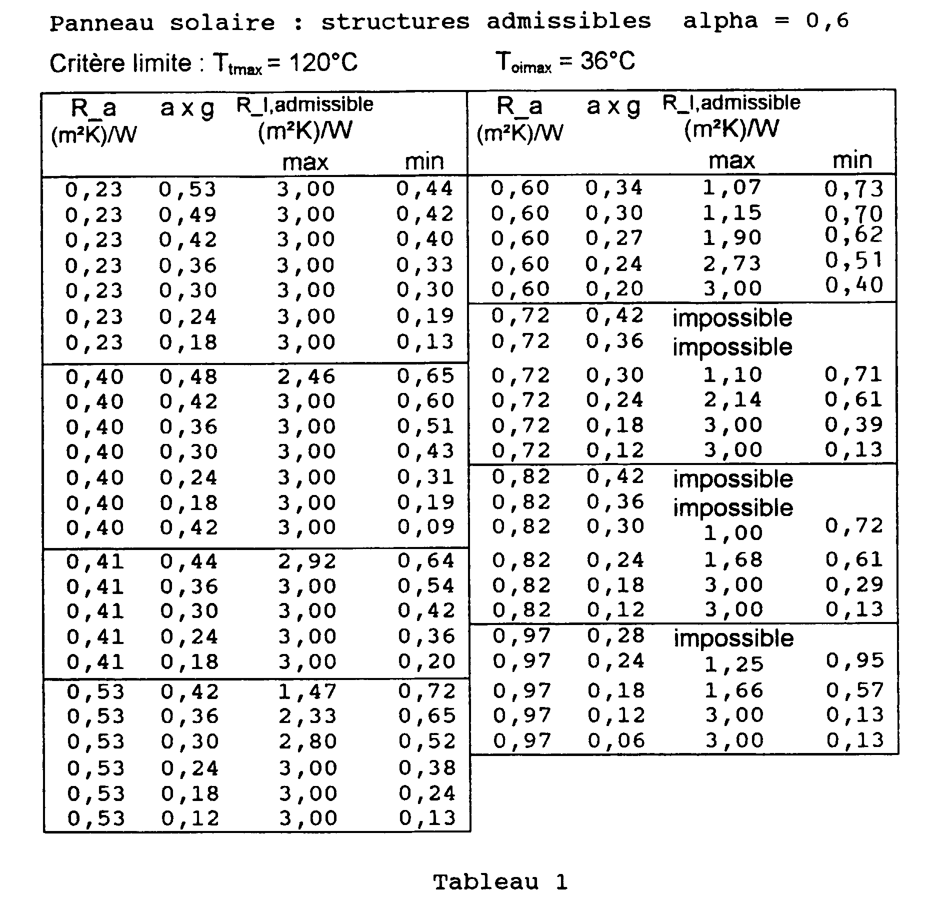 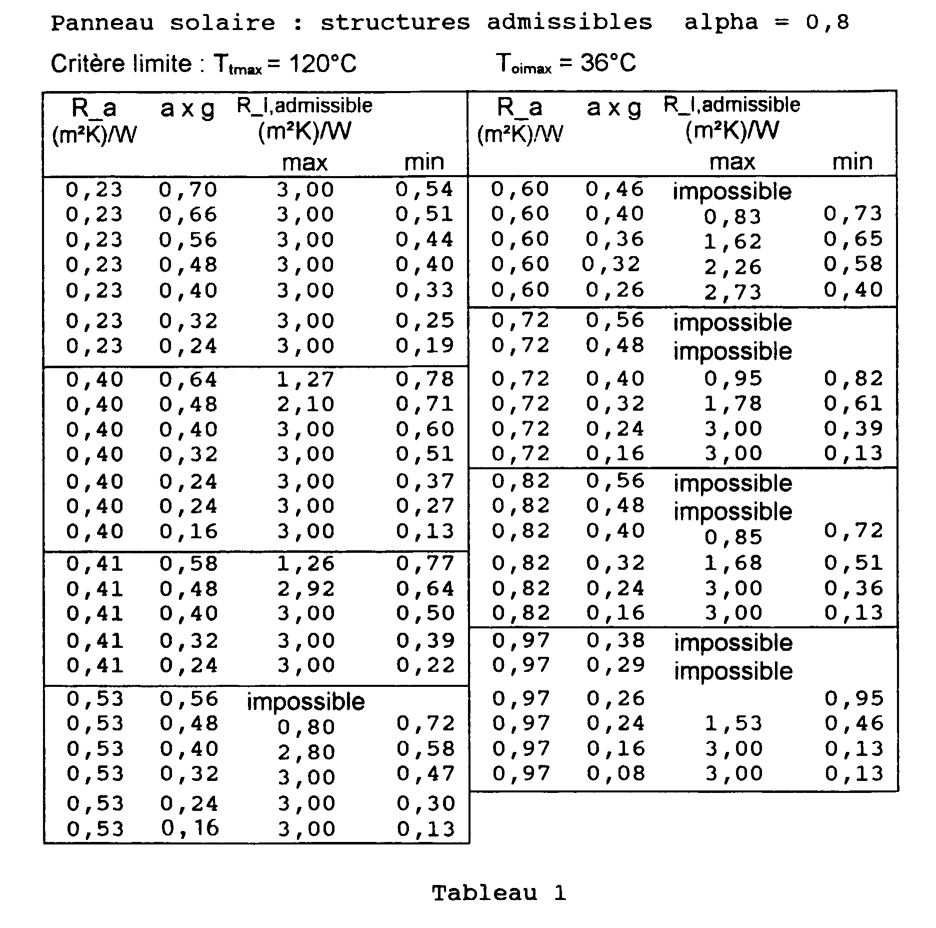 et dans le tableau pour alpha égal à 0,2 ; 0,4 ; 0,6 et 0,8 on a rassemblé, respectivement en fonction de Rₐ (première colonne) et de alpha*g (deuxième colonne), la valeur maximale admissible (troisième colonne) et la valeur minimale (quatrième colonne) pour Rᵢ et des valeurs intermédiaires peuvent être déterminées au moyen d'interpolations.

2. Structure extérieure de mur selon la revendication 1, caractérisée en ce que la structure de mur possède des valeurs de alpha*g et Rₐ, indiquées dans le tableau suivant (tableau 2), et une valeur de Rᵢ, qui se situe dans la gamme de Rᵢ associée respectivement à ces valeurs de alpha*g et Rₐ et indiquées dans le tableau 2 :

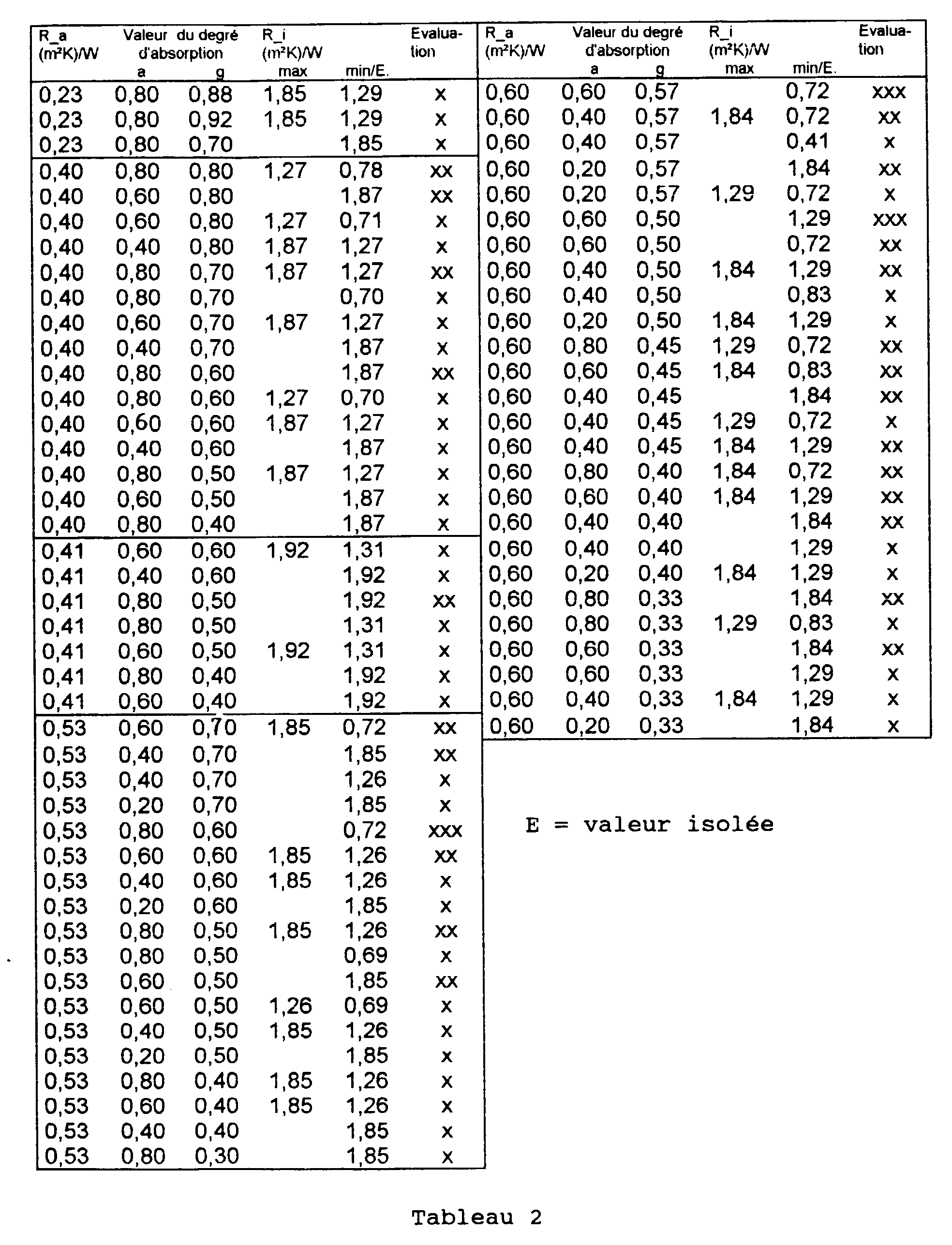

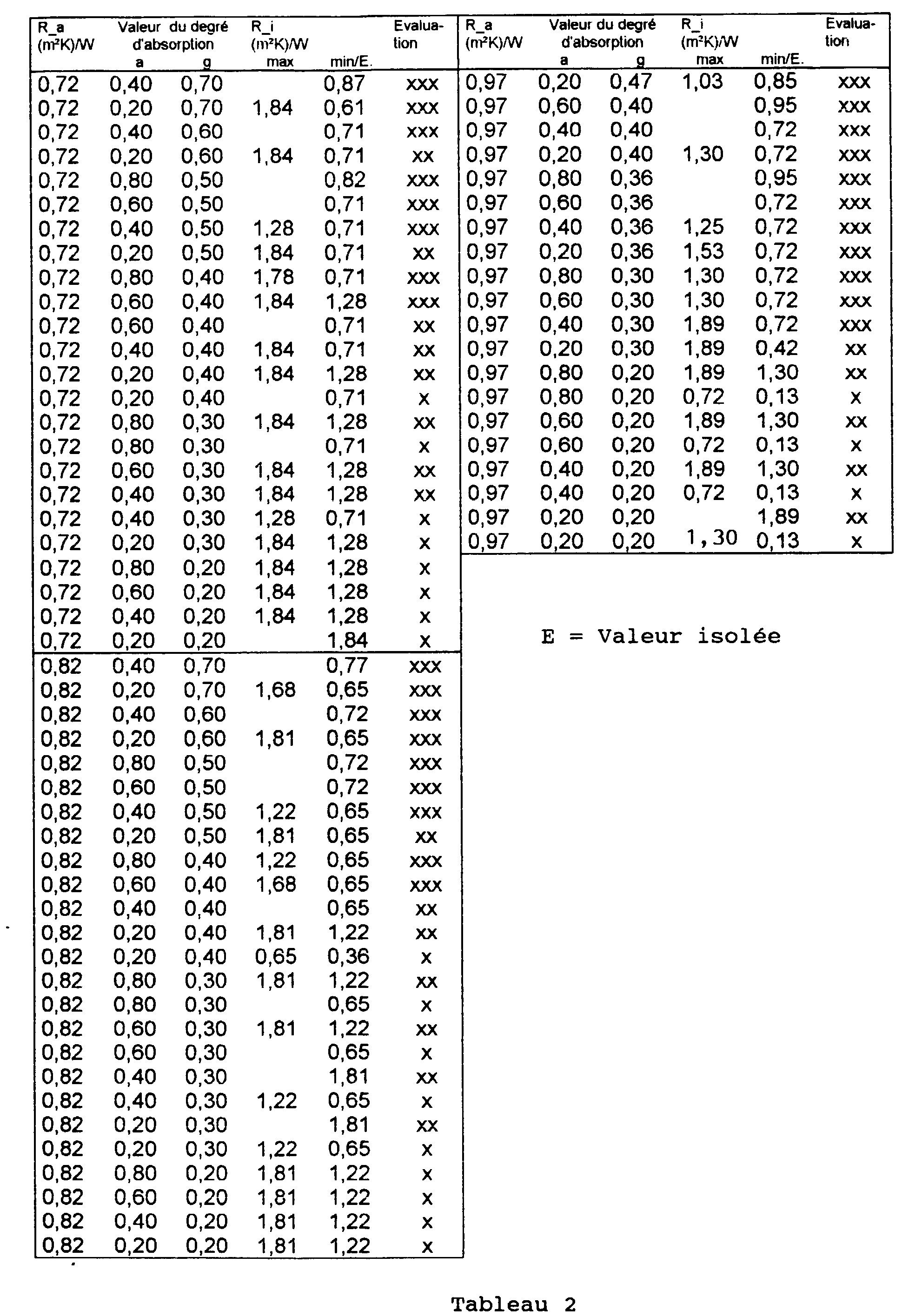

3. Structure extérieure de mur selon l'une des revendications 1 ou 2, caractérisée en ce que dans le cas de l'accord réciproque entre les grandeurs Rₐ, Rᵢ, alpha et alpha*g, la valeur maximale possible qₛₘₐₓ à laquelle on peut s'attendre, du rayonnement solaire incident et supposée pour la direction dans le ciel, qui correspond à l'orientation de la structure extérieure de mur dans le bâtiment.

4. Structure extérieure de mur selon l'une des revendications 1 à 3, caractérisée en ce que la paroi extérieure (10) du mur est formée par un vitrage et la couche extérieure transparente d'isolation thermique (30) est formée par une couche d'air possédant une épaisseur comprise entre 5 et 50 mm et égale de préférence à 20 mm.

5. Structure extérieure de mur selon la revendication 4, caractérisée en ce que dans le cas d'un vitrage comportant deux vitres ou plus, la couche extérieure d'isolation thermique (30) est formée entre les vitres.

6. Structure extérieure de mur selon la revendication 5, caractérisée en ce que le vitrage est formé par une seule vitre (11) comportant éventuellement une couche intérieure d'isolation thermique, notamment une couche L-E et/ou une couche de protection contre le soleil.

7. Structure extérieure de mur selon la revendication 5, caractérisée en ce que le vitrage est formé par des éléments de verre isolant comportant respectivement deux ou trois vitres (11, 12, 13).

8. Structure extérieure de mur selon la revendication 7, caractérisée en ce que les éléments de verre isolant sont séparés par des espaces intercalaires réduits de l'ordre de 4 à 8 mm.

9. Structure extérieure de mur selon la revendication 7 ou 8, caractérisée en ce que les vitres (11, 12, 13) comportent des revêtements de protection thermique, notamment des couches L-E, en des positions isolées, en plusieurs positions ou dans toutes les positions (1 à 6).

10. Structure extérieure de mur selon l'une des revendications 7 à 9, caractérisée en ce que les éléments de verre isolant ou leurs vitres (11, 12, 13) sont équipés de couches de protection contre le soleil.

11. Structure extérieure de mur selon l'une des revendications 7 à 10, caractérisée en ce que les espaces intercalaires entre les éléments de verre isolant sont remplis par un gaz rare.

12. Structure extérieure de mur selon l'une des revendications 1 à 11, caractérisée en ce que la paroi intérieure (20) du mur contient une couche d'accumulation de chaleur (21), qui est disposée sur la face de la couche transparente (21'), tournée à l'opposé de la couche extérieure transparente d'isolation thermique (30).

13. Structure extérieure de mur selon la revendication 12, caractérisée en ce que la couche d'accumulation thermique (21) est située entre la couche de séparation (21') et la couche intérieure d'isolation thermique (22).

14. Structure extérieure de mur selon la revendication 12, caractérisée en ce que la couche de fermeture (23) sur le côté intérieur est formée en tant que couche d'accumulation de chaleur.
